# EUROPEAN PATENT SPECIFICATION

(11) **EP 1 791 327 B1**
(45) Date of publication and mention of the grant of the patent: **02.07.2014**
(21) Application number: 05782325.4
(22) Date of filing: 09.09.2005
(51) Int. Cl.: H04M 1/00, H04N 7/173

(54) **DATA PROCESSING DEVICE AND CONTENT DATA TRANSMISSION DEVICE**
DATENVERARBEITUNGSEINRICHTUNG UND INHALTSDATENÜBERTRAGUNGSEINRICHTUNG
DISPOSITIF DE TRAITEMENT DE DONNEES ET DISPOSITIF D'EMISSION DE DONNEES UTILES

(30) Priority: 10.09.2004 JP 2004264723
(43) Date of publication of application: 30.05.2007
(60) Divisional application: 14169490.1
(73) Proprietor: Sharp Kabushiki Kaisha, Osaka-shi, Osaka 545-8522 (JP)
(72) Inventor: UEDA, Toru, Kyoto 619-0215 (JP); NAKAGAWA, Katsuya, Kyoto 619-0223 (JP); UMEMOTO, Azusa, Kyoto 619-0202 (JP); KAMINOKADO, Tsukasa, Nara 632-0093 (JP); DOI, Katsuo, Nara 633-0062 (JP); NISHIMURA, Hideki, Chiba 261-0025 (JP)
(74) Representative: Treeby, Philip David William
(86) International application number: PCT/JP2005/016602
(87) International publication number: WO 2006/028203

(56) References cited:
- EP-A1- 1 450 517
- EP-A2- 1 150 506
- JP-A- 2001 217 846
- JP-A- 2004 177 586
- US-A1- 2002 013 869
- US-A1- 2004 117 632
- "SPECIFICATION OF THE BLUETOOTH SYSTEM, CORE, VERSION 1.0 B, SERVICE DISCOVERY PROTOCOL (SDP)" INTERNET CITATION 7 September 2001 (2001-09-07), XP002176975 Retrieved from the Internet: URL:www.bluetooth.com [retrieved on 2001-09-07]
- RAKOTONIRAINY A ET AL: "RESOURCE DISCOVERY FOR PERVASIVE ENVIRONMENTS" LECTURE NOTES IN COMPUTER SCIENCE, SPRINGER, DE LNKD- DOI:10.1007/3-540-36124-3_57, vol. 2519, 1 January 2002 (2002-01-01), pages 866-883, XP007900027 ISSN: 0302-9743

## Description

### Technical Field

The present invention relates to a system for using data stored in a portable information terminal in another device and, more specifically, to a system allowing handy use of information stored in a portable device capable of obtaining or forming information but limited in information displaying/playing function such as a portable telephone with camera, a PDA (Personal Digital Assistant) with communication function or a digital camera, in a device having higher displaying/playing function such as a television receiver or an audio instrument.

### Background Art

Portable telephones come to have larger number of functions. A representative multi-functional portable telephone has functions of a digital camera, liquid crystal display and access to the Internet. Using such a portable telephone, it is possible to send an image picked up by the digital camera to a friend using the electronic mail transmitting function of the portable telephone, through a portable telephone network or the Internet. Portable telephones having a music playing function are also used widely, and it is already a common practice to download music data from the Internet to a portable telephone and to use the portable telephone as a portable music player.

On the other hand, memories come to have larger capacities, and data storage capacity of a portable telephone has been increased dramatically. Many users store electronic data of photographs and music in their portable telephones, and play and enjoy the electronic data on the road.

In such situations, however, limited size of the device imposed by functional characteristics of the portable telephones leads to a problem. For instance, a liquid crystal display of a portable telephone is small, and it is not suitable to show an image thereon to many people. This problem remains unsolved as long as the absolute size of the liquid crystal display is the same, no matter how high the resolution of the liquid crystal display becomes. As for the music, it is impossible to mount a large speaker on a portable telephone. Therefore, a user must select whether to use a headphone or to settle for poor sound quality of a small speaker.

In view of the foregoing, various solutions have been proposed.

Patent Document 1 specified below discloses a method in which a file is transmitted to a printer through a network, and in the printer, file type and print format information described in the header are extracted from the received file and printing is done in a setting determined in accordance with the information. When data are transmitted using a portable telephone, different headers are formed and transmitted dependent on whether the object of printing is text data or image data. By this approach, it is possible to print text data and image data in respectively appropriate settings.

Patent Document 2 discloses a printer having a plurality of data input ports for receiving data from external devices, in which print setting is changed dependent on which port was used for receiving the data to be printed. Patent Document 2 further discloses data receiving means having one port and capable of receiving data following a plurality of data transfer protocols. When data is received by the data receiving means, the printer changes the setting at the time of printing dependent on which protocol was used. By way of example, when document data is transmitted from a portable telephone to the printer, a document data transfer protocol is used, and when an image is transmitted, an image transfer protocol is used. On the printer side, setting for document printing is used for printing data transferred following the document transfer protocol, and setting for image printing is used for printing data transferred following the image transfer protocol.

Patent Document 3 discloses downloading of karaoke data through a network using a portable telephone and transmitting the karaoke data further from the portable telephone to a karaoke machine by infrared ray. Karaoke data is obtained by a portable telephone having communication means and the data is further transmitted to karaoke playing machine, and therefore, one can enjoy karaoke with playing machine of higher performance, rather than the poor image and music playing functions of the portable telephone.

US 2004/0117632 discloses a system and method for limiting access to data including a secured appliance. The secured appliance has limited responsiveness to received remote control data frames unless such remote control data frames include parameters matching those stored within the secured appliance
Patent Document 1: Japanese Patent Laying-Open No. 2000-10745
Patent Document 2: Japanese Patent Laying-Open No. 2004-154960
Patent Document 3: Japanese Patent Laying-Open No. 2004-177586

### Disclosure of the Invention

### Problems to be Solved by the Invention

In any of the inventions described above, when some information is to be transmitted to and processed by a device performing some process, it is necessary to set the receiving side device in an appropriate state beforehand. By way of example, when data is to be transmitted to a printer, it is necessary that printing of data from other printer must have been completed. In a television (TV) receiver displaying television broadcast, input source must be changed.

Preparation as described above, however, is troublesome when, for example, a user receives an attachment file by a portable telephone and wishes to view the attachment file on a large screen. Particularly when the user uses a portable information terminal such as a portable telephone that can be used at any place and the user wishes to display the attachment file of an electronic mail on a TV receiver, the user is bothered to go in front of the TV receiver or to look for a remote controller of the TV receiver, and to set the receiver to a required state.

Further, if there is a device having a function of receiving data other than the device of data transmission destination, it is possible to send the data erroneously to a different device. Erroneous data transmission to an unintended device may cause a problem.

Therefore, an object of the present invention is to provide a data processing apparatus capable of transmitting data held in a portable information terminal or the like to a desired receiving apparatus in a simple manner and allowing appropriate processing, as well as a content data transmitting apparatus for that purpose.

Another object of the present invention is to provide a data processing apparatus capable of safely transmitting data held in a portable information terminal or the like to a desired receiving apparatus in a simple manner and allowing appropriate processing, as well as a content data transmitting apparatus for that purpose.

A further object of the present invention is to provide a data processing apparatus capable of safely transmitting data held in a portable information terminal or the like to a desired receiving apparatus in a simple manner and allowing appropriate processing without any troublesome operation on the side of the receiving apparatus, as well as a content data transmitting apparatus for that purpose.

### Means for Solving the Problems

According to a first aspect, the present invention provides a data processing apparatus, including: first and second wireless receiving means each capable of receiving data through wireless communication, the first wireless receiving means capable of receiving first data from a transmission source and the second wireless receiving means capable of receiving second data from the transmission source; a first data processing means connected to the first wireless receiving means; and a second data processing means connected to the second wireless receiving means and the first data processing means; wherein the first data processing means includes means operable to perform a process on the first data, determined in accordance with the second data, and the second data is received after, or simultaneously with, the reception of the first data, and wherein said first data received by said first wireless receiving means is encrypted by a prescribed encryption key, and the process performed by said means for performing a process included in said first data processing means includes decrypting said first data received by said first wireless receiving means using the second data received by said second wireless receiving means as an encryption key.

When the second wireless receiving means receives data from the same apparatus as the data received by the first wireless receiving means, the data received by the first wireless receiving means is processed in accordance with the data received by the second wireless receiving means. Transmission of data as the object of processing and the processing of that data can be designated by the data transmitting side, without requiring any designation of the method of processing on the side of the data processing apparatus.

Preferably, the means included in the first data processing means is operable to perform the process on a series of data received by the first wireless receiving means.

When a series of data is received by the first wireless receiving means and thereafter data is received by the second wireless receiving means, processing of the series of data received by the first wireless receiving means is executed. Correspondence between complete reception of data to be processed and processing thereof can reliably be determined, and hence, appropriate processing can be effected. Further, the processing can be designated while the data received by the first wireless receiving means is still fresh in user's memory.

The two data may be received in simultaneous and parallel manner, and therefore, even when data to be processed has large data capacity and data reception by the first wireless receiving means is not yet complete, it is possible to determine the manner of processing from the data received by the second wireless receiving means, and a necessary processing can be done.

More preferably, the first and second wireless receiving means use wireless communication media of types different from each other.

By way of example, the first wireless receiving means includes radio wave wireless receiving means, and the second wireless receiving means includes an infrared receiving means.

The first wireless receiving means receives data on radio waves without directivity, and therefore, data can be received stably regardless of the position and attitude of the transmitting side. Further, as the second wireless receiving means receives control data using infrared ray of high directivity, possibility of erroneous reception of the control data by some other device can be reduced.

More preferably, the first and second wireless receiving means use wireless communication medium of the same type but of modulation methods different from each other.

As wireless communication media different from each other are used, communication by the first wireless receiving means can be distinguished from the communication by the second wireless receiving means, and hence, interference of data can be avoided.

More preferably, the first wireless receiving means includes a first infrared receiving means receiving infrared ray modulated by a first modulation method; and the second wireless receiving means includes a second infrared receiving means receiving infrared ray modulated by a second modulation method different from the first modulation method.

Even when the first and second wireless receiving means both use infrared ray, there is no possibility of interference in data reception, as the two means use modulation methods different from each other.

More preferably, transfer rate of the first wireless receiving means is higher than transfer rate of the second wireless receiving means.

Generally, the amount of data as the object of processing is far larger than that of data designating manner of processing. By increasing the transfer rate of the first wireless receiving means to which the data as the object of processing is transmitted, it becomes possible to complete data transmission in a shorter time period. Further, though it is highly possible that transmission of control data occurs at an arbitrary timing in the second receiving means, the amount of data is small, and hence, a method with slow transfer rate may be used.

When the transfer medium used by the first wireless receiving means does not have any directivity, the data to be processed may possibly be received by some other apparatus. When the data is encrypted, however, the content of the data cannot be known by some other apparatus even if the data should be received. Further, as the encryption key is transmitted by the second wireless receiving means having high directivity, possibility that the key is received by other apparatus is quite low. Therefore, the data can be decrypted and processed only by the data processing apparatus as the data transfer destination, and safety of data transfer can be attained.

Preferably, the data processing apparatus further includes data storage means for storing data received by the first wireless receiving means; and second data processing means responsive to reception of a prescribed control designating signal by the second wireless receiving means, for executing the process designated by the control designating signal on the data stored in the data storage means.

The received data may be processed immediately, or it may be stored once and processed later in accordance with a control instruction signal received by the second wireless receiving means. It becomes unnecessary to send a large volume of data time and again, and the processing of data can be executed at an arbitrary time with the data transferred only once.

More preferably, data received by the first wireless receiving means includes content data playable in accordance with a prescribed playing method; and the data processing apparatus further includes playing means for playing the content data processed by the data processing means.

When the content data is received, the content is played by the playing means in accordance with the data received by the second wireless receiving means. It is unnecessary on the side of the data processing apparatus to instruct play.

More preferably, the data processing apparatus further includes content data recording means for recording the content data processed by the first data processing means and applying the content data to the playing means for play upon receiving a prescribed instruction.

The received content data may be processed immediately, or it may be stored once and processed later in accordance with a prescribed instruction. It becomes unnecessary to send a large volume of content data time and again, and the content data can be played at an arbitrary time with the data transferred only once.

The data processing apparatus may further include determining means for determining whether data received by the first wireless receiving means and recorded in the content data recording means is movie data or not; means responsive to a determination by the determining means that the data received by the first wireless receiving means and recorded in the content data recording means is movie data, for forming a thumbnail selecting image having one or a plurality of thumbnail images arranged as a list from the data received by the first wireless receiving means, and applying the thumbnail selecting image to a prescribed display apparatus for display; and means responsive to application of thumbnail designating information designating any of the one or a plurality of thumbnail images from the second wireless receiving means, for starting play of the movie data from a position corresponding to the thumbnail image based on the movie data recorded in the content data recording means and applying it to the display apparatus.

When the first wireless receiving means receives movie data, the thumbnail selection image is formed, and displayed on a display apparatus. When any of the thumbnail images is designated, play starts from the portion of the movie data that corresponds to the designated thumbnail image. Even when the movie data is long, portions considered less interesting can be skipped and play may be started from a portion of higher interest. It is unnecessary for the transmitting side to prepare thumbnail images in advance.

Preferably, the data processing apparatus is a video recorder apparatus.

As described above, according to the present invention, transmission of data to be processed and the processing thereon can be designated on the data transmitting side, without requiring designation of the processing method on the side of the data processing apparatus. As both data are received in a simultaneous and parallel manner, even when data to be processed has large data capacity and data reception by the first wireless receiving means is not yet complete, it is possible to determine the manner of processing from the data received by the second wireless receiving means, and a necessary preparation can be done. Further, it is unnecessary for the receiving side apparatus to newly designate the processing.

Further, by increasing the transfer rate of the first wireless receiving means to which the data as the object of processing is transmitted, it becomes possible to complete data transmission in a shorter time period.

By encrypting data and transmitting the same by the first wireless transmitting means and by transmitting the encryption key by the second wireless receiving means having high directivity, possibility of reception of the key by some other apparatus becomes extremely low, and hence, security of data transfer is established.

Further, it is unnecessary to transmit a large volume of data time and again, and processing of the data can be executed at an arbitrary timing with the data transferred only once.

According to another aspect of the present invention, it is unnecessary on the side of the data processing apparatus to newly instructs output of the content data received by the first wireless receiving means, and the content data can be transmitted from another apparatus to the data processing apparatus in a handy manner and output to a prescribed output destination.

Further, when the main data is expected to include various types of data, it is possible to execute an appropriate processing in accordance with the type of the main data based on attribute information. It is unnecessary for the user of the data processing apparatus to select an appropriate processing in accordance with the type of the main data.

When the main data is compressed, a plurality of data can be received and appropriately processed without requiring the user of the data processing apparatus to know the information related to compression.

According to a further aspect of the present invention, an appropriate processing of the content data can be performed only by the receiving apparatus that has received both the desired content data and the prescribed control information related to processing to be executed on the content data. Therefore, it is possible to transmit the content data to a desired destination while maintaining confidentiality of the content data.

The content data selecting means may include means for selecting content data stored in the content data storing means and supplying the data to the first wireless transmitting means. In that case, in an apparatus having a function of immediately playing the content data after receiving the content data, a quasi-slide-show effect can be realized, even when the apparatus does not have the slide-show function.

By implementing the content data transmitting apparatus by a portable telephone or a portable information terminal, it becomes possible, on the road for example, to transmit the desired content to a receiving apparatus and to execute an appropriate processing such as play.

### Brief Description of the Drawings

Fig. 1 shows a schematic configuration of an information system 50 in accordance with a first embodiment.
Fig. 2 is a schematic illustration of an operation of information system 50 in accordance with the first embodiment.
Fig. 3 is a block diagram of a portable telephone 64 in accordance with the first embodiment.
Fig. 4 is a flowchart of a main portion of a program executed by portable telephone 64.
Fig. 5 schematically illustrates compression of an html file.
Fig. 6 schematically shows an example of an image saving window for an image.
Fig. 7 schematically shows an example of image saving window for a plurality of images.
Fig. 8 is a block diagram of a DVD recorder 70 with hard disk in accordance with the first embodiment.
Fig. 9 is a flowchart of a main portion of a program executed by DVD recorder 70 with hard disk.
Fig. 10 is a flowchart of a data playing process shown in Fig. 9.
Fig. 11 shows a schematic configuration of an information system 400 in accordance with a second embodiment.
Fig. 12 is a schematic illustration of an operation of information system 400 in accordance with the second embodiment.
Fig. 13 schematically shows thumbnail display of a movie in accordance with the second embodiment.
Fig. 14 is a block diagram of a portable telephone 402 in accordance with the second embodiment.
Fig. 15 is a flowchart of a main portion of a program executed by portable telephone 402.
Fig. 16 is a block diagram of a DVD recorder 410 with hard disk in accordance with the second embodiment.
Fig. 17 is a flowchart of a main portion of a program executed by DVD recorder 410 with hard disk.
Fig. 18 is a flowchart of content processing shown in Fig. 17.
Fig. 19 shows a schematic configuration of an information system 550 in accordance with a third embodiment.
Fig. 20 is a block diagram of a digital camera 560 in accordance with the third embodiment.
Fig. 21 is a flowchart for a slide-show executed by digital camera 560 in accordance with the third embodiment.

### Description of Reference Characters

50, 400, 550 information system, 60 content server, 62 portable telephone network and the Internet, 64, 402 portable telephone, 66, 404 content playing system, 68 IrDA communication, 70, 410 DVD recorder with hard disk, 72 cable, 74 monitor, 80, 162 IrDA communication unit, 82, 572 infrared receiving unit, 90, 92, 94 image, 100, 430 lid, 102, 432 body, 110 liquid crystal display, 142 4-directional push switch, 144 function key, 146 basic key, 160 wireless communication unit, 164 image data generating unit, 166, 304 main data storage unit, 168 attribute storage unit, 170, 308, 424, 460, 570 control unit, 172, 306 data decompressing unit, 174 data display unit, 176, 318, 576 input unit, 190 image pick-up unit, 192 data compressing unit, 194 attribute generating unit, 200 data processing unit, 202 data buffer, 300 attribute storage unit, 302 attribute determining unit, 310 content processing unit, 312 TV tuner, 314, 428 image combining/switching unit, 316 power supply circuit, 320 sound switching unit, 406 wireless transmission, 408 infrared transmission, 420, 450 wireless LAN communication unit, 422 data decrypting unit, 426, thumbnail image forming unit, 440 movie data, 452 encryption key forming unit, 456 infrared transmitting unit, 458 encrypting unit, 560 digital camera, 562 remote controller, 574 timer

### Best Modes for Carrying Out the Invention

In the following, the present invention will be described with reference to three embodiments. In the description below, the same components are denoted by the same reference characters. Their names and functions are also the same. Therefore, detailed description thereof will not be repeated.

In the description of the embodiments and in the claims, "play" of data means display of still image data, playing of movie data, or display of its part as a still image, generation of sound signal from music data, and so on.

### [First Embodiment]

### - Outline -

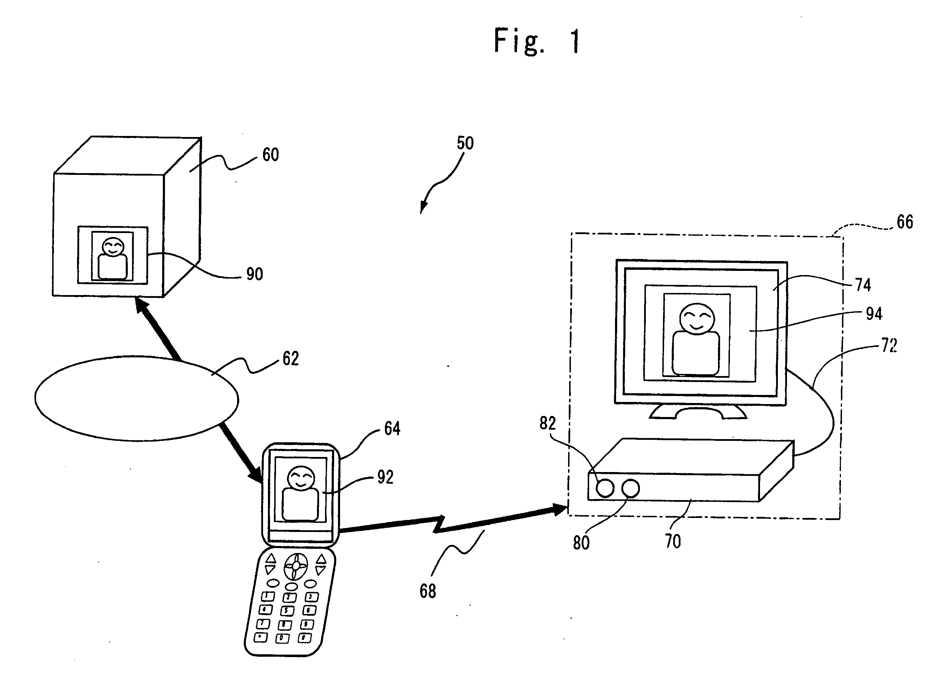

Fig. 1 shows a schematic configuration of an information system 50 in accordance with the first embodiment of the present invention.
Referring to Fig. 1, information system 50 includes a portable telephone 64 having a function of downloading content such as an image 90 (or electronic mail data having content data of a photograph or the like as an attachment file) from a content server 60 (typically a WEB server or a mail server) on the Internet through a portable telephone network and the Internet 62, a function of picking-up an image by digital still camera, and a function of transferring data through IrDA (Infrared Data Association) communication 68; and a content playing system 66 having a function of starting display or play of content data when content data allowing display or play is received from portable telephone 64 through IrDA communication 68.

Content play system 66 includes a DVD (Digital Versatile Disk) recorder 70 with hard disk, and a monitor 74 connected to DVD recorder 70 with hard disk through a cable 72.

Portable telephone 64 has a function of downloading an image 90 or the like from content server 60 through a portable telephone network and the Internet 62, and holding the same as image 92 or the like. Further, portable telephone 64 has a function of transmitting any of the contents held therein, such as image 92, designated by the user, to DVD recorder 70 with hard disk through IrDA communication 68.

DVD recorder 70 with hard disk has an IrDA communication unit 80 including a photo detector for receiving IrDA communication 68, and an infrared receiving unit 82 including a photo detector, for receiving infrared communication from a remote controller (hereinafter referred to as a "remote"). In response to reception of content through IrDA communication unit 80, DVD recorder 70 with hard disk activates a corresponding function and displays or plays the content, if the content could be processed by itself. Though two communication units, that is, IrDA communication unit 80 and infrared receiving unit 82 are described here, physically, only one communication unit is sufficient if it allow reception in accordance with two different communication methods.

DVD recorder 70 with hard disk further includes a TV tuner provided therein, and typically, it receives TV broadcast and applies a program of a designated channel to monitor 74 through cable 72. When IrDA communication unit 80 receives some content, operation is automatically switched from the displayed program to an operation of displaying or playing the content. In the example shown in Fig. 1, when DVD recorder 70 with hard disk receives data of an image 92 from a portable telephone 64 though IrDA communication unit 80, it plays and displays the image data as image 94 on a display screen of monitor 74.

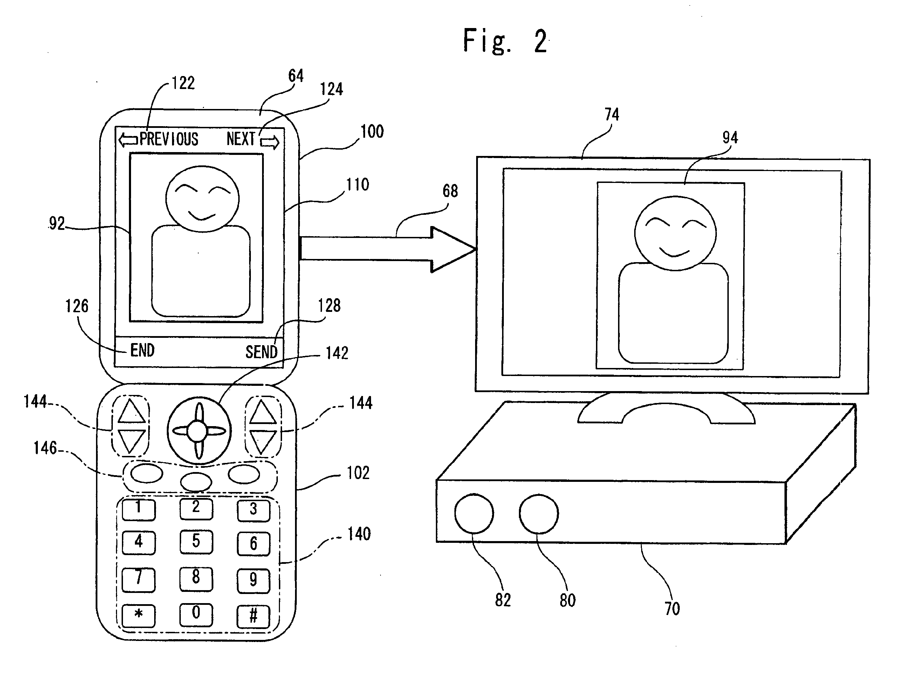

Referring to Fig. 2, the configuration for operating portable telephone 64 and an operation by the user of portable telephone 64 to realize the operation above will be described. Referring to Fig. 2, portable telephone 64 has a body 102 having an approximately rectangular planer shape, and a lid portion 100 having a liquid crystal display 110 and attached rotatably about a hinge on one side of body 102.

On an operating surface of body 102, ten keys 140 for inputting numerals 0 to 9 and signs "#" and "*", function keys 144 to which various functions are allotted in accordance with a display on the screen, a 4-directional push switch 142 with a center push button, basic keys 146 including a power key and a call key are provided.

On liquid crystal display 110, content such as image 92 is displayed at the center, and instruction messages 122, 124, 126 and 128 such as previous, next, end, and send are displayed at four corners. Functions indicated by these messages 122, 124, 126 and 128 are allotted to function key 144, respectively, by a program.

When a user selects an image display, the image is displayed as shown in Fig. 2. In accordance with the instructions of instruction messages 122 and 124, the user selects an image to be transmitted, using function key 144, and then instructs "transmission", whereby the image displayed on liquid crystal display at that time is compressed, transferred to DVD recorder 70 with hard disk through IrDA communication 68, and played and displayed as image 94 or the like, on monitor 74.

In the following, configurations of portable telephone 64 and DVD recorder 70 with hard disk forming information system 50 performing the operation above will be described.

### - Configuration of Portable Telephone 64 -

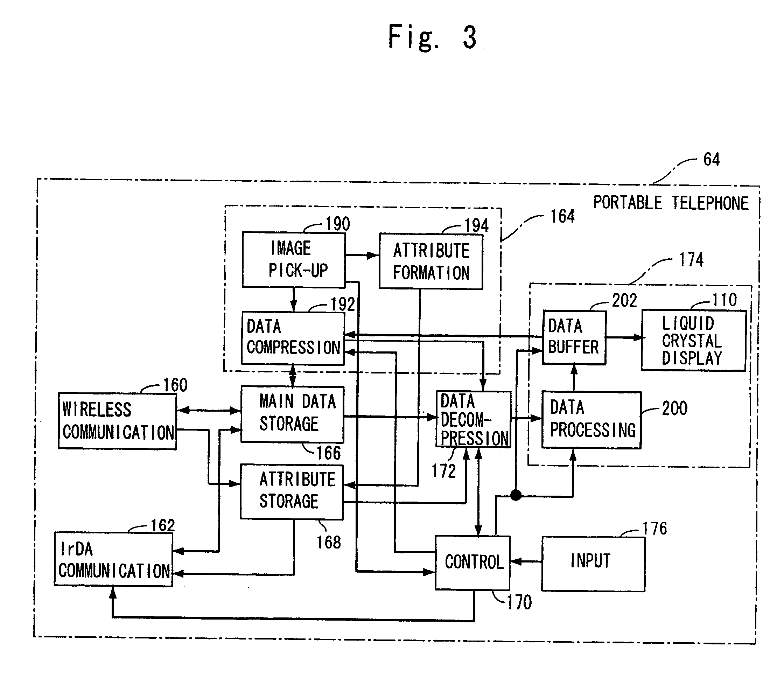

Fig. 3 is a block diagram showing the configuration of portable telephone 64. Referring to Fig. 3, portable telephone 64 includes: a wireless communication unit 160 for communicating with another portable telephone through a portable telephone network or for communicating with a server on the Internet through the portable telephone network and the Internet; an IrDA communication unit 162 for infrared communication; a main data storage unit 166 storing main data received through wireless communication unit 160 or to be transmitted through wireless communication unit 160; an attribute storage unit 168 for storing attributes of data received through wireless communication unit 160 or data obtained by portable telephone 64; and an image data generating unit 164 for generating image data. It is often the case that the main data is a file body. Attribute information includes file name, time and data of formation, producer, format type, size, content time and the like of the data.

Image data generating unit 164 includes: an image pick-up unit 190 for picking-up a digital still image or a digital movie and generating digital data; a data compressing unit 192 for compressing the digital data obtained by image pick-up unit 190 and for storing the data in main data storage unit 166; and an attribute generating unit 194 for generating data representing attributes of the digital data obtained by image pick-up unit 190 and for storing the same in attribute storage unit 168. The attributes generated by attribute generating unit 194 is, by way of example, represented by a so-called extension such as JPG, GIF, PNG, MPG, MOV and the like representing the image format.

Portable telephone 64 further includes: a data decompressing unit 172 for decompressing, when the received data received by wireless communication unit 160 and stored in main data storage unit 166 is compressed data, or when the data is picked-up by image pick-up unit 190, compressed by data compressing unit 192 and stored in main data storage unit 166, the data in accordance with the attributes of the data stored in attribute storage unit 168; a data display unit 174 for displaying the data decompressed by data decompressing unit 172; an input unit 176 for receiving an operation input by the user; and a control unit 170 controlling various functional units of portable telephone 64 in accordance with a prescribed program, based on a user instruction given from input unit 176, and controlling movement of data in portable telephone 64. Generally, when the data is an image, it is often the case that the data is compressed in JPEG format or the like, and in such a case, the data is decompressed by data decompressing unit 172. There may be data that does not require decompression, such as text data. In such a case, data decompressing unit 172 does not perform data decompression.

Data display unit 174 includes: liquid crystal display 110 also shown in Figs. 1 and 2; a data processing unit 200 for processing (for example, enlarging or reducing) the data decompressed by data decompressing unit 172 for display on liquid crystal display 110, in accordance with a display setting given by control unit 170; and a data buffer 202 storing the display data output from data processing unit 200 and applying the same to liquid crystal display 110 to be displayed. Data buffer 202 is also connected to an input of data compressing unit 192, and the content of data buffer 202 may be compressed by data compressing unit 192. The function is used when the image data itself displayed on liquid crystal display 110 is to be transmitted to DVD recorder 70 with hard disk, as will be described later.

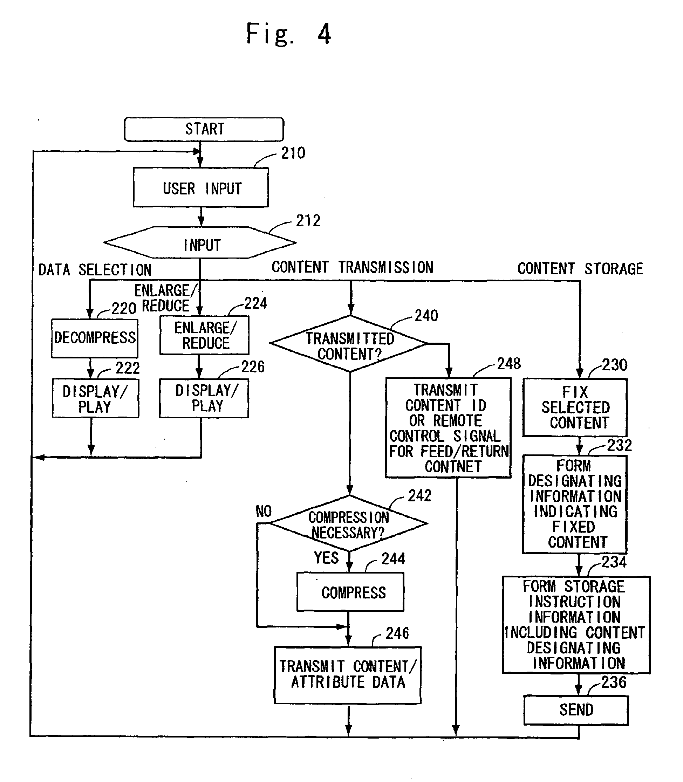

The control function of control unit 170 described above and other functions of functional units are realized by a program executed by a CPU (Central Processing Unit), not shown, provided as hardware in portable telephone 64. Fig. 4 is a flowchart representing the control structure of the main routine of the program. The flowchart of Fig. 4 is only a portion related to the present invention extracted from functions of portable telephone 64, and program portions for general telephone call and reception of electronic mail through the Internet are omitted.

Referring to Fig. 4; when the program starts, the program waits for an input by a user (step 210). When a user input is received, the program branches to a number of routines in accordance with the type of the input. In the present embodiment, the user input may be selection of image data and the like, instruction of enlarging/reducing the size of an image, transmission of image data and the like to DVD recorder 70 with hard disk, and storage instruction information of image data and the like in DVD recorder 70 with hard disk, and in accordance with the input, the program flow branches to step 220, 224, 240 or 230.

The steps following step 220 correspond to a process for data selection. First, at step 220, the selected data is decompressed in accordance with its attributes. Then, at step 222, the data is displayed/played on liquid crystal display 110 in accordance with display setting at that time. After the end of the process of step 222, the flow returns to step 210.

Steps following step 224 correspond to a process when an instruction to enlarge/reduce the size of the image is received. First, at step 224, image data that has already been decompressed and displayed on liquid crystal display 110 is subjected to enlargement/reduction process in accordance with the user instruction. The data enlarged/reduced in this manner is displayed/played on liquid crystal display 110 at step 226. After step 226, the flow returns to step 210.

Steps following step 240 corresponds to a process for transmitting the image data being displayed at present to DVD recorder 70 with hard disk, using wireless communication unit 162. At step 240, whether the content of which transmission is instructed have already been transmitted to DVD 70 with hard disk or not is determined. If transmission has already been done, the flow proceeds to step 248, and if not, the flow proceeds to step 242.

At step 242, whether it is necessary to compress the image data or not before transmitting the image data is determined. If compression is unnecessary, the flow proceeds to step 246, and if it is necessary, the flow proceeds to step 244.

Here, an example requiring compression is as follows. When a still image of 3,000,000 pixels is picked-up and a part thereof is enlarged, it is possible that a still image corresponding to 300,000 pixels is displayed on liquid crystal display 110. Assuming that a transmission instruction is given in this situation, possible option is to transmit the still image of 3,000,000 pixels or to transmit the still image of 300,000 pixels presently displayed. The original image is typically compressed in JPEG format, while the image of 300,000 pixels currently on display is not compressed. Therefore, when the still image of 300,000 pixels is to be transmitted, the image of 300,000 pixels is newly compressed at this stage, for transmission. By this process, it becomes possible to transmit the same image as that displayed on liquid crystal display 110, in a short period of time.

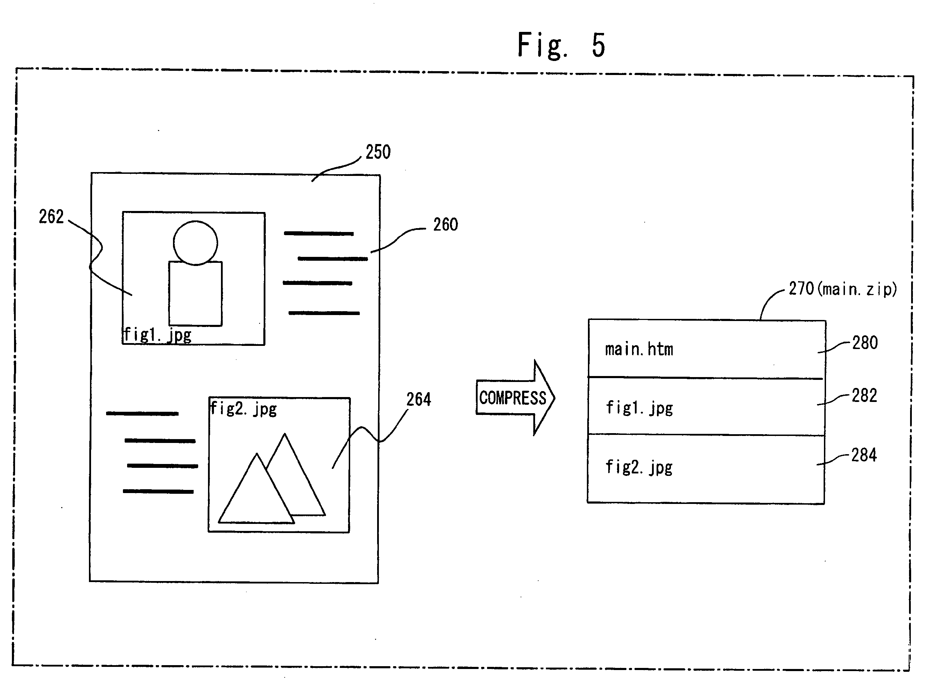

At step 244, image data is compressed, attribute data representing the manner of compression is formed, and then the flow proceeds to step 246. Fig. 5 shows another typical example in which compression is effective. Referring to Fig. 5, assume that the data displayed on portable telephone 64 is an html (hypertext mark-up language) document 250. As is well known, the html document consists of text 260, while links to still image/movie/ sound file and the like may be embedded in desired portions of text 260. An apparatus (such as portable telephone 64) that receives the html document activates a program (browser) allowing display of the html document, and the browser displays the html document on a display of the apparatus. At this time, when the browser encounters a link embedded in the html document, the browser accesses and downloads the file (still image/movie/sound file and the like) specified by a URL (Uniform Resource Locator) designated by the link, and incorporates the same in the html document in a prescribed format to be displayed. In the example of Fig. 5, images 262 and 264 are incorporated in text 260 and displayed in this manner.

When the user wishes to transmit an html document displayed on portable telephone 64 to DVD recorder 70 with hard disk, it is desired to transmit not only the html file but also the image file and the like incorporated in the html document. Therefore, in the present embodiment, when a URL is incorporated in the html, the file downloaded from the URL is also compressed collectively with the html file, and transmitted as one file. In the example shown in Fig. 5, text 260 forming the html document 250 as well as image files corresponding to images 262 and 264 are collectively compressed, for example, in zip format, to form a transmission file 270, and the file is transmitted. Transmission file 270 includes html text 280 and image files 282 and 284 in compressed format, which correspond to text 260 and image files of images 262 and 264, respectively.

Referring again to Fig. 4, at step 246, compressed content and attribute data of compressed file, or content before compression and attribute data thereof are transmitted through IrDA communication unit 162. When transmission ends, the flow returns to step 210.

At step 248, information designating transmitted content is transmitted to DVD recorder 70 with hard disk. Specifically, content ID of the content is sent to DVD recorder 70 with hard disk. Alternatively, using content that is being played at present by DVD recorder 70 with hard disk as a reference, how far the content to be transmitted is moved in front or behind the content being played is checked, and the information thereof is transmitted to DVD recorder 70 with hard disk. Such information is referred to as content movement information. By way of example, the content movement information is available where files have serial numbers, such as in the case of a series of image files. Thereafter, control returns to step 210.

When it is determined at step S212 that the user input instructs storage of content, a process for fixing the content selected by the user is performed at step 230. At step 232, information designating the fixed content (content designating information) is formed. At step 234, storage instruction information including the content designating information is formed. The storage instruction information thus formed is transmitted at step 236 to DVD recorder 70 with hard disk. Then, control returns to step 210.

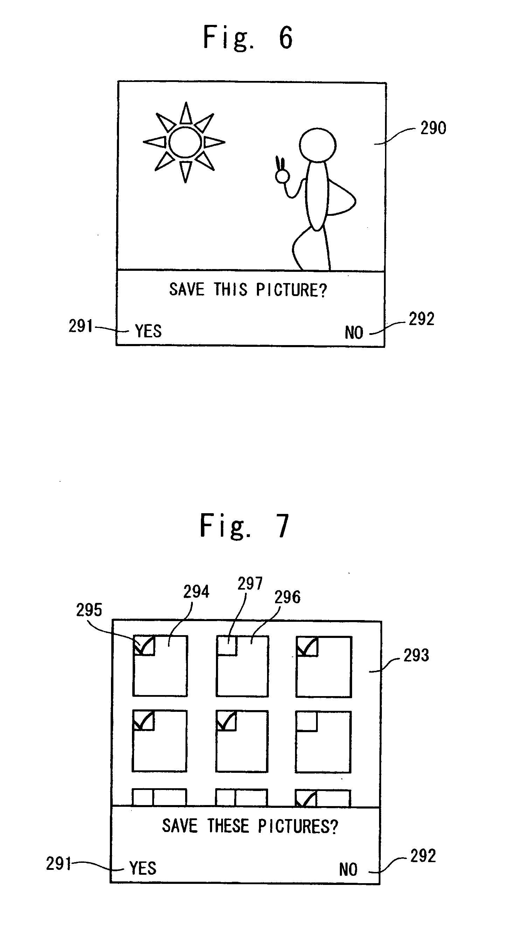

Fig. 6 shows an example of an image displayed on portable telephone 64 when content such as an image is to be stored in DVD recorder 70 with hard disk. Assume that content 290 such as photographs are displayed on the display screen of portable telephone 64. When one of the photographs is fixed and a prescribed key of portable telephone 64 is operated, the image of Fig. 6 appears. On this image, two buttons 291 (Yes) and 292 (No) for designating whether the image should be stored or not are displayed, in addition to the content 290. When button 291 is pressed, storage instruction information designating the content 290 is transmitted to DVD recorder 70 with hard disk, and the image is stored in content storage unit 322, as will be described later. When button 292 is pressed, the storage process is stopped.

When a plurality of contents are displayed, it is possible to arbitrarily designate one or more of these and to designate storage of contents. Fig. 7 shows an example of an image displayed on the screen of portable telephone 64 in such a situation. Referring to Fig. 7, assume that thumbnails 294, 296, ...of a plurality of images are displayed on an image display area 293. These thumbnails have, for example, check boxes 295, 297, ..., respectively. When a user checks the check boxes of arbitrary thumbnails and presses button 291, an instruction for storing contents corresponding to the plurality of checked thumbnails is transmitted from portable telephone 64 to DVD recorder 70 with hard disk. In response, designated content is stored in DVD recorder 70 with hard disk. When button 292 is pressed, the storage process is stopped.

Though not shown, it is possible to set for each of the contents attributes for permitting/inhibiting storage. Contents to which attribute of inhibition is set are not transferred from main data storage unit 304 to contents storage unit 322, and naturally, they are not stored. Further, in such a case, control unit 170 is adapted to provide a display informing the user that the storage is not permitted.

### - Configuration of DVD recorder 70 with hard disk -

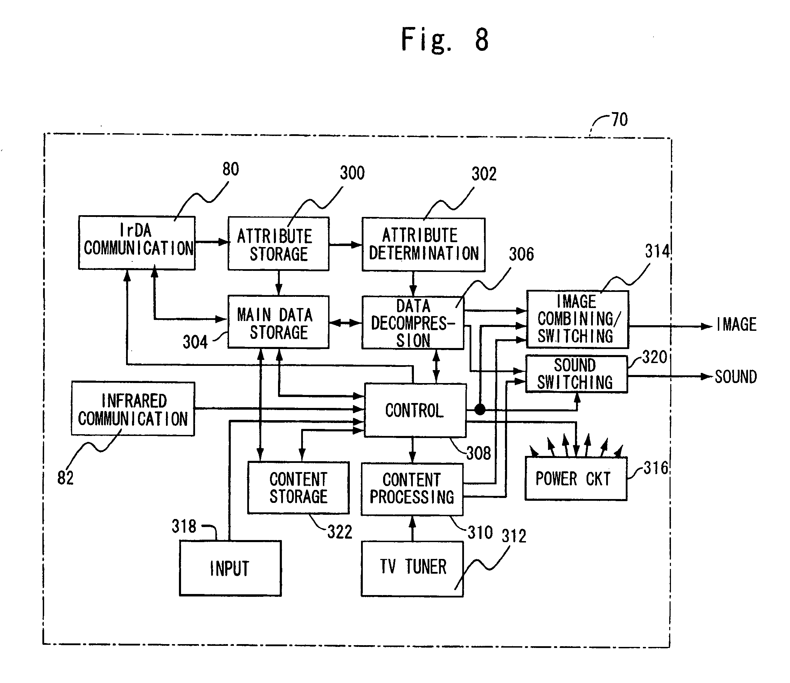

Fig. 8 is a block diagram showing functional configuration of DVD recorder 70 with hard disk shown in Fig. 1. It is noted that in Fig. 8, among various functional units of DVD recorder 70 with hard disk, those not related to the present invention are not shown.

Referring to Fig. 8, in addition to IrDA communication unit 80 and infrared receiving unit 82 described above, DVD recorder 70 with hard disk includes: a main data storage unit 304 storing data received by IrDA communication unit 80 and data to be transmitted through IrDA communication unit 80; an attribute storage unit 300 for storing attributes of data received by IrDA communication unit 80; an attribute determining unit 302 for determining whether the received data can be processed by DVD recorder 70 with hard disk or not, based on the attributes stored in attribute storage unit 300; and a data decompressing unit 306 for reading the received data of which decompression is determined to be possible by attribute determining unit 302 from data storage unit 304 and for decompressing the same.

DVD recorder 70 with hard disk further includes a TV tuner 312, and a content processing unit 310 for performing a prescribed process on the content data of a TV program received by TV tuner 312. The process performed by content processing unit 310 includes, assuming that digital broadcast is received, for example, extraction of a transport stream of MPEG2, decoding MPEG2 and generating image and sound.

DVD recorder 70 with hard disk further includes: an input unit 318 for receiving an operation input by a user; a control unit 308 responsive to control data received from a remote, not shown, through infrared receiving unit 82, an operation input by a user received through input unit 318 or a signal from data decompressing unit 306 receiving and decompressing content data through IrDA communication unit 80, for controlling various functional units of DVD recorder 70 with hard disk and generating image and sound signals to be transmitted to monitor 74; an image combining/switching unit 314 having two inputs for receiving an image signal from data decompressing unit 306 and an image signal from content processing unit 310, for switching between the image signal from data decompressing unit 306 and the image signal from content processing unit 310, or for combining the image signal from one of these as a small window in the image signal from the other, under control by control unit 308; a sound switching unit 320 having two inputs receiving a sound signal from data decompressing unit 306 and a sound signal from content processing unit 310, and performing a process of switching between the sound signal from data decompressing unit 306 and the sound signal from content processing unit 310 to be output, under control by control unit 308; a content storage unit 322 formed of a hard disk or a DVD drive, for storing data stored in main data storage unit 304 or data processed by control unit 308, under control of control unit 308; and a power supply circuit 316 for supplying power supply voltage to various portions forming DVD recorder 70 with hard disk, under control of control unit 308.

It is possible, in accordance with the control data received by infrared receiving unit 82 to turn on/off data reception at IrDA communication unit 80, to permit/inhibit decompression of the received data, to switch display, or to instruct display, enlargement or reduction of the received content.

In the present embodiment, even when a main power is off, a power supply voltage is supplied to IrDA communication unit 80, infrared receiving unit 82, attribute storage unit 300, attribute determining unit 302, main data storage unit 304, data decompressing unit 306 and control unit 308, and when it is found from the result of decompression at data decompressing unit 306 that the data received by IrDA communication unit 80 is content data allowing playing process by DVD recorder 70 with hard disk, control unit 308 performs control such that power supply circuit 316 is operated to turn the power on, even when the main power is off.

Control unit 308 further has the following function. As described above, even when the main power is off, power of DVD recorder 70 with hard disk and power of monitor 74 are automatically turned on upon reception of content data. Thus, the data transmitted by the user from portable telephone 64 can be displayed/played on monitor 74. It is unnecessary for the user to manually turn on the power of DVD recorder 70 with hard disk and of monitor 74. Further, assume that broadcast data received by TV tuner 312 is selected by image combining/switching unit 314 and sound switching unit 320 and is displayed on monitor 74, and it is determined that data decompressing unit 306 has received content data. Then, control unit 308 controls image combining/switching unit 314 and sound switching unit 320 such that the image signal and the sound signal from data decompressing unit 306 are selected. Therefore, even when other broadcast program is displayed on the screen of monitor 74, when content data is received from portable telephone 64 through IrDA communication unit 80, display/play of the received content data starts automatically. Further, when storage instruction information designating content stored in main data storage unit 304 is received from portable telephone 64 through IrDA communication unit 80, control unit 308 stores the designated content in content storage unit 322.

Upon reception of content data, whether the display of broadcast program is to be fully switched to display/play of content data or to a combined display of broadcast program in a small window on the display screen of content data may be set using control unit 308.

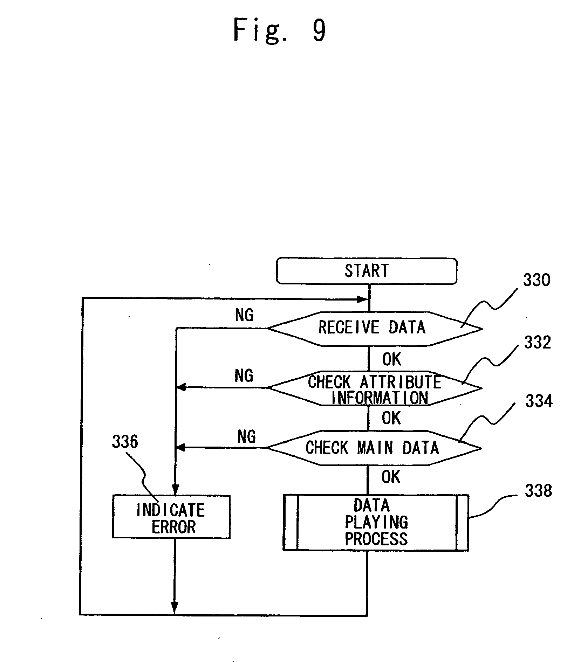

Main portion of the functions of control unit 308 of DVD recorder 70 with hard disk are realized by a CPU (not shown) as a part of hardware constituting DVD recorder 70 with hard disk and by a computer program executed by the CPU. Fig. 9 shows a flowchart of a main process of the computer program used in DVD recorder 70 with hard disk in accordance with the present embodiment. Here again, portions of the program not directly related to the present invention are omitted.

Referring to Fig. 9, first, at step 330, whether IrDA communication unit 80 has successfully received data or not is determined. If reception was successful, the flow proceeds to step 332, or otherwise, the flow proceeds to step 336. At step 332, attribute information of the received data is checked. If the attribute information is acceptable, the flow proceeds to step 334. If not, the flow proceeds to step 336.

At step 334, of the received data, main data (content data) is checked. Here, whether processing by DVD 70 with hard disk is possible or not is checked, lest the data amount should be too large, or reception of full data should have failed. If the main data is acceptable, the flow proceeds to step 338. If not, the flow proceeds to step 336.

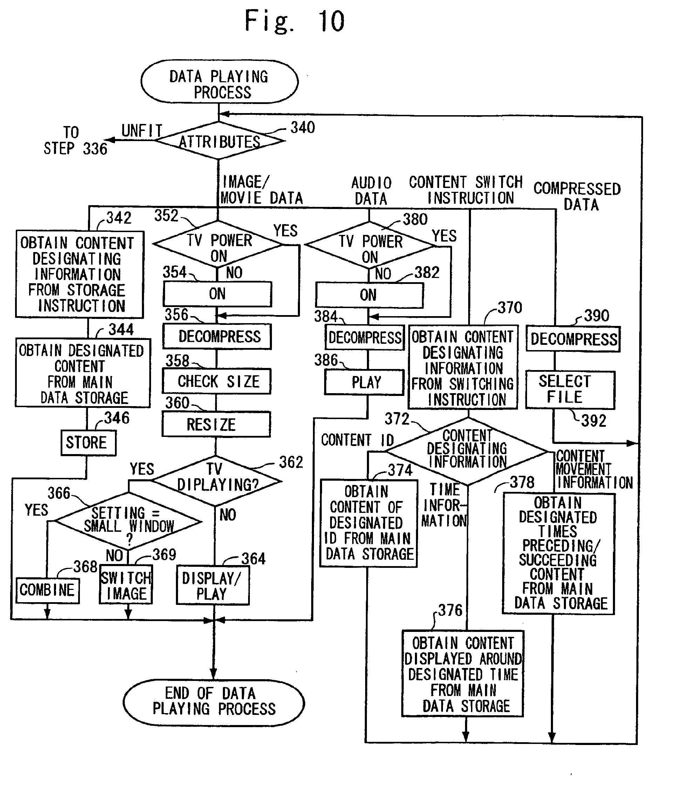

At step 338, data playing process is executed. Content thereof will be described later with reference to Fig. 10. At step 336, in accordance with a result of determination made at each of steps 330, 332 and 334, an error message is displayed. After the display, the flow returns to step 330, to be ready for reception of next data.

Fig. 10 is a detailed flowchart of the data playing process performed at step 338 of Fig. 9. Here, the process is selected in accordance with the attributes of the received data. If it is music, music playing software is called, and if it is video data, video playing software is called, to perform processing (display, reproduction, play and the like) of respective contents. Referring to Fig. 10, first, at step 340, the attributes of the received data is determined, and in accordance with the result, the flow branches to any of the following steps. Specifically, if the attributes represent storage instruction information, the flow proceeds to step 342, if they represent image/movie data, the flow proceeds to step 352, if they represent content switching instruction, the flow proceeds to step 370, if they represent audio data, the flow proceeds to step 380, and if they represent compressed data, the flow proceeds to step 390, respectively. If they are none of these, the flow proceeds to step 336 shown in Fig. 9, at which an error message is displayed and the next data reception is done.

If the received data is storage instruction information, the control is as follows. Specifically, at step 342, from the received storage instruction information, content designating information designating which content should be stored is obtained. At step 344, the designated content is obtained from main data storage unit 304, and at step 346, the content is stored in content storage unit 322. At this time, power of DVD recorder 70 with hard disk is turned on, if necessary.

If the received data is image/movie data, the control is as follows. Specifically, at step 352, whether the power of DVD recorder 70 with hard disk and of monitor 74 (hereinafter, when both of these two are collectively referred to, these will be called "TV receiver" for convenience) are on or not is checked. If the power is on, the flow proceeds to step 356. If it is off, the power of TV receiver is turned on at step 354, and then the flow proceeds to step 356. By the power on, not only DVD recorder 70 with hard disk but also monitor 74 is turned on.

At step 356, the received data is decompressed. At step 358, the decompressed image data is examined, to confirm lest the display size should be too large as compared with the display screen of monitor 74. Specifically, at step 358, size check is done. At step 360, dependent on the result of determination at step 358, a process of re-sizing is done, if it is necessary to adjust the image size to the screen size of monitor 74.

At step 362, whether TV broadcast is being displayed on TV receiver or not is determined. If TV broadcast is being displayed, the flow proceeds to step 366, and if not, the flow proceeds to step 364.

At step 366, it is determined whether setting is done to combine and display in a small window the broadcast that has been received by that time. If the result of determination is YES, the process of displaying the program in a small window in combination with the image is performed at step 368. If setting is not so, the display is switched from the broadcast image to the content image data at step 369, and content display is executed. After steps 368 and 369, the data playing process ends.

On the other hand, at step 364, the received content is displayed and played, and after the end of display and play, the data playing process ends.

If it is determined at step 340 that the received data is audio data, whether the power of TV receiver is on or not is determined at step 380. If the power of TV receiver is not on, at step 382, the power of TV receiver is turned on. Thereafter, at step 384, audio data is decompressed, play of the decompressed audio data by the TV receiver starts at step 386, and then the process ends.

At step 340, when it is determined that the received data is a content switching instruction, content designating information designating content to be newly played is obtained from the content switching instruction at step 370. At step 372, it is determined whether the content designating information is content ID, time information or content movement information. If the content designating information is the content ID, the flow proceeds to step 374; if it is time, the flow proceeds to step 376; if it is the content movement information, the flow proceeds to step 378, respectively.

At step 374, content having the content ID designated by the content designating information is obtained from data storage unit 304. Thereafter, the flow returns to step 340, at which the process corresponding to the type of the content is executed. At step 376, the content that have been displayed by DVD recorder 70 with hard disk around the time designated by the content designating information are obtained from the main data storage unit 304. Then, the flow returns to step 340, and the process corresponding to the type of the obtained content is executed. At step 378, the content in front of or behind the content presently being displayed by the number designated by the content movement information is obtained from main data storage unit 304. Then, the flow returns to step 340, and the process corresponding to the type of the obtained content is executed.

If it is determined at step 340 that the received data is compressed data, a process for decompressing the received data in accordance with the compression format is executed at step 390. The decompression may result in a plurality of files, for example, when the object file is a compressed html document. The files as decompressed each have attributes different from the data attribute before decompression, and hence, appropriate attribute information is attached to the files and stored in the main data storage unit 166. Further, at step 392, the decompressed file (when there are a plurality of files, a file selected in accordance with a prescribed rule; for an html document, the html text) is selected as the object of display/play, and the determination process of step 340 is again executed. Based on the determination, the decompressed data is appropriately processed in accordance with its attributes. Decompression of a compressed file may also result in a plurality of files of the same type (for example, image files). In such a case, it is possible to display all the resulting files at one time.

It is possible to include a specific description for controlling a receiving device such as DVD recorder 70 with hard disk in a file, and to control the receiving device in accordance with the description. When such an approach is taken, though it is slightly different from the concept of data play, an application for setting the receiving device in accordance with the control description may be activated. Such an operation may be referred to as display/play of content in a broader sense.

### - Operation -

Information system 50 in accordance with the first embodiment operates as described in the following. It is assumed that, before the operation as described below, as shown in Fig. 1, a user holding portable telephone 64 has downloaded image data such as an image 90 from content server 60 through the portable telephone network and through the Internet 62, has received an electronic mail with image data attached, or has picked up images using image pick-up unit 190 shown in Fig. 3, so that some image data and movie data (hereinafter referred to as "image data etc.") have been stored in main data storage unit 166 of portable telephone 64.

When the user wishes to show such image data to other people or wishes to view the image data on a larger screen, the user has the image data displayed on liquid crystal display 110 of portable telephone 64, as shown on the left side of Fig. 2. By operating function key 144 while reading instruction messages 122, 124 and the like, the user has a desired image displayed on liquid crystal display 110. At this time, control unit 170 shown in Fig. 3 performs processes of steps 220 and 222 shown in Fig. 4 in accordance with an instruction applied from input unit 176, and displays the image designated by the user.

More specifically, referring to Fig. 3, in accordance with an instruction received from input unit 176, control unit 170 gives an instruction to data decompressing unit 172 to read the images successively from main data storage unit 166 and to decompress the same. Image data read from main data storage unit 166 and decompressed by data decompressing unit 172 are applied to data processing unit 200. Images written from data processing unit 200 further to data buffer 202 are displayed on liquid crystal display 110.

When the desired image is displayed, the user instructs "enlargement" or "reduction." Though the image display for this purpose is not shown in Fig. 2, it may be done in the similar manner as data selection. When enlargement or reduction of the displayed image is instructed, processes of steps 224 and 226 of Fig. 4 are executed, and when the image is displayed as desired, the user instructs "transmission."

More specifically, referring to Fig. 3, receiving an instruction of enlargement or reduction from input unit 176, control unit 170 causes data processing unit 200 to execute the process of enlarging or reducing the image in accordance with the instruction. An output of data processing unit 200 is applied to data buffer 202, and the enlarged or reduced image is displayed on liquid crystal display 110.

When the desired image in the desired size is displayed on liquid crystal display 110, the user instructs "transmission." The instruction is given from input unit 176 to control unit 170 shown in Fig. 3. Control unit 170 executes processes of steps 242 to 246 shown in Fig. 4. Specifically, first, whether the designated data requires compression or not is determined at step 242. Typically, this process is executed when an html document is being displayed on liquid crystal display 110. Further, as the image data has large data size, compression is done to shorten the time of transmission.

If compression is determined to be necessary, the data is compressed at step 244, and compressed (or not compressed) data is transmitted using

IrDA communication unit 162 shown in Fig. 3 to DVD 70 with hard disk, at step 246.

Referring to Fig. 3, operations of various portions of portable telephone 64 when there is an instruction of data transmission will be described. Receiving a transmission instruction, control unit 170 instructs data compressing unit 192 to read data from data buffer 202, if the displayed data is an image. In response to the instruction, data compressing unit 192 reads the image data displayed on liquid crystal display 110 from data buffer 202 directly. If the displayed data is an html document, control unit 170 instructs data compressing unit 192 to read files forming the currently displayed html document from main data storage unit 166. In response to the instruction, data compressing unit 192 reads the files forming the html document, from main data storage unit 166.

Further, if compression is necessary, control unit 170 instructs data compressing unit 192 to compress data. Typically, when the data to be transmitted is an html document, it is compressed, for example, to one zip file, by data compressing unit 192. It is desirable when image data in data buffer 202 is transmitted, to execute compression by data compressing unit 192 and to convert the data to a JPEG file or the like.

Data compressing unit 192 stores the compressed data in main data storage unit 166. Control unit 170 instructs IrDA communication unit 162 to transmit the data, designating an address of the data in main data storage unit 166. In response to the instruction, IrDA communication unit 162 reads the designated data from main data storage unit 166, and transmits the same to DVD recorder 70 with hard disk. At this time, IrDA communication unit 162 reads attributes of the data to be transmitted from attribute storage unit 168, and transmits them simultaneously to DVD recorder 70 with hard disk.

Receiving an instruction from the user to transmit a plurality of images, control unit 170 arranges thumbnails of stored images, and displays these with check boxes, on liquid crystal display 110. The user selects thumbnails and checks corresponding check boxes, and then presses a button instructing transmission, whereby control unit 170 transmits selected images. Transmission of each image file takes place in the similar manner as the transmission of a single image file described above.

In the present embodiment, it is assumed that a compressed file stored in main data storage unit 166 is deleted from main data storage unit 166 after it is read by IrDA communication unit 162, to save storage capacity. When a plurality of files are to be transmitted, one to be transmitted next is compressed in advance. When the file to be transmitted next is known, advance compression of the file reduces time necessary for transmission, and hence, operation performance of the apparatus can be improved.

In the present embodiment, at the time of transmission using IrDA, IrDA communication unit 162 of portable telephone 64 and IrDA communication unit 80 of DVD recorder 70 with hard disk shown in Fig. 8 transmit data almost free of any protocol. Therefore, transmission rate is fixed beforehand to the highest possible rate of communication between the two communication units. It is not implemented to request re-transmission from IrDA communication unit 80 to IrDA communication unit 162 in case of data transmission failure. Therefore, data is transferred at high speed, and the image is immediately displayed on monitor 74. If transmission should fail, the image is not immediately displayed on monitor 74. Therefore, the user immediately notices transmission failure. The user may give an instruction of transmission again at that time. This is an approach placing priority on higher rate of transfer, than secure transmission at the device level. It is naturally possible to adopt a method involving automatic re-transmission, dependent on the required reliability of communication.

Referring to Fig. 8, receiving the data, IrDA communication unit 80 has main data storage unit 304 store the data. Further, IrDA communication unit 80 has the attribute information, which is transmitted simultaneously, stored in attribute storage unit 300. Based on the attribute information stored in attribute storage unit 300, attribute determining unit 302 determines whether the received data can be decompressed by DVD recorder 70 with hard disk or not, and indicates the result to data decompressing unit 306. Based on the indication, if the received data stored in main data storage unit 304 allows decompression, data decompressing unit 306 decompresses the data in main data storage unit 304, and applies the result to image combining/switching unit 314. Further, data decompressing unit 306 applies a signal indicating data reception and completion of data decompression to control unit 308. The content data decompressed in main data storage unit 304 is held as cache data in main data storage unit 304.

It is assumed that when data is received, the received data is stored successively in main data storage unit 304. By this approach, it becomes unnecessary to receive data again that has already been transmitted once. When data designating any of the data stored in main data storage unit 304 is received, it is possible to read the data from main data storage unit 304 and play the same. Therefore, provided that the data stored in main data storage unit 304 can be distinguished, it is possible to operate DVD recorder 70 with hard disk as if the data itself has been transmitted from portable telephone 64 to DVD recorder 70 with hard disk, simply by transmitting information designating the data from portable telephone 64. It may be possible to store the received data in main data storage unit 304 in the compressed form. If it takes time to decompress the received data, not the data before decompression but decompressed data may be stored in main data storage unit 304 as described above, to save time necessary for the next play.

Receiving a signal indicating completion of data decompression from data decompressing unit 306, control unit 308 first gives an instruction to power supply circuit 316, so that portions other than the portion related to communication described above of DVD recorder 70 with hard disk are powered on. Specifically, even when power of portions other than the portion related to communication of DVD recorder 70 with hard disk has been off, it is turned on at this stage. Further, commonly, the power of monitor 74 is linked to DVD recorder 70 with hard disk, and therefore, monitor 74 is simultaneously powered on. When power of DVD recorder 70 with hard disk and power of monitor 74 are on, control unit 308 performs no operation here.

Next, control unit 308 instructs image combining/switching unit 314 and to sound switching unit 320, to select and output the output from data decompressing unit 306. If it is designated by a display setting that the broadcast program from TV tuner 312 is to be combined in a small window, image combining/switching unit 314 reduces the program selected by TV tuner 312 to a small window and combines it with the image data, to form a video signal, which is applied to monitor 74.

In information system 50 in accordance with the present embodiment, when the content data stored in portable telephone 64 is to be displayed on monitor 74 or the like of larger size, the user displays the desired content data on liquid crystal display 110 of portable telephone 64. Thereafter, IrDA communication unit 162 is directed to IrDA communication unit 80 of DVD recorder 70 with hard disk, and transmission is instructed. Then, even if the power of DVD recorder 70 with hard disk should be off, DVD recorder 70 with hard disk and monitor 74 are automatically activated, and the content data selected by the user is displayed/played on the screen of monitor 74. When DVD recorder 70 with hard disk and monitor 74 are on and a program of a certain channel is being displayed, the display is automatically switched to display/play of the received content. Therefore, it is possible for the user to have the data stored in portable telephone 64 displayed or played on monitor 74 in a quite simple manner.

When the content data is enlarged/reduced on liquid crystal display 110, the enlarged/reduced content data is transferred to DVD recorder 70 with hard disk. Therefore, when a specific portion of an image is to be enlarged and displayed, every designation can be made on the side of portable telephone 64, and it is unnecessary to operate DVD recorder 70 with hard disk. Even when DVD recorder 70 with hard disk does not have the function of enlarging/reducing an image, enlargement/reduction of the image is realized. When data is enlarged and displayed, data of those portions of the image that are not displayed on liquid crystal display 110 are not transmitted from portable telephone 64 to DVD 70 with hard disk. Thus, the amount of data to be transferred is reduced, and the communication takes shorter time. As a result, the image can immediately be displayed when the user wishes to have the image displayed on monitor 74.

Here, it may be possible that from one content data (such as a still image of 6,000,000 pixels), a partial data (such as a partial image of 2,000,000 pixels) is formed and transmitted. In such a case, if the receiving side is a recorder, what is necessary is simply to store the original data. Therefore, it is desired that the relation of the enlarged/reduced data (derivative data) to the original data is made clear, to allow confirmation of the correspondence therebetween. By way of example, if the original file has a file name "F001.jpg", the derivative file should be "F001-001.jpg". By adopting such a naming system, it becomes possible to erase the derivative file on the receiving side, and hence, it becomes unnecessary to keep storing useless data.

As to the transfer from IrDA communication unit 162 to IrDA communication unit 80, a transfer method substantially free of any protocol is used, and communication is done with the transfer rate fixed beforehand at a common rate. Time-consuming negotiation for establishing connection is unnecessary, and data transfer from portable telephone 64 to DVD recorder 70 with hard disk and display on monitor 74 can be completed in a short time. Therefore, at a presentation away from home, for example, it is possible to give a sharp and effective presentation where DVD recorder 70 with hard disk is available, by storing content beforehand in portable telephone 64.

Further, according to the embodiment described above, when an electronic mail with an attachment is received by portable telephone 64, the attachment file (typically an image file) may be enlarged on a TV receiver nearby to enjoy with others, in a simple manner.

### - Modification -

In the embodiment above, as the data representing the attributes of the data, one that is the same as the so-called extension is used. This has an effect that compatibility of data with a computer can be maintained in a simple manner. The present invention, however, is not limited to such an embodiment, and data attributes may be represented in a unique system.

Further, in the embodiment described above, the apparatus receiving the content data is DVD recorder 70 with hard disk. The expected receiving apparatus of the present invention, however, is not limited to a DVD recorder with hard disk. By way of example, a TV receiver having the IrDA communication function, or a set top box may be used as a receiving apparatus.

Further, in the embodiment described above, a portable telephone is used as the transmitting apparatus. The present invention, however, is not limited to such an embodiment, and the transmitting apparatus may be implemented by using a digital still camera, a video camera such as a digital video camera, or a portable information terminal.

Further, in the embodiment above, image data generating unit 164 having an image pick-up unit 190 has been described as an example. The present invention, however, is not limited to such an embodiment. By way of example, in place of or in addition to image pick-up unit 190, a mounting portion for mounting a detachable non-volatile memory may be provided on portable telephone 64. When such a function is provided, it becomes possible to transmit content data formed by another apparatus from portable telephone 64 to DVD recorder 70 with hard disk and to play/display the data on monitor 74.

### [Second Embodiment]

### - Outline -

In the first embodiment, IrDA communication is used for transmitting content data from portable telephone 64 to DVD recorder 70 with hard disk. Medium of IrDA communication is infrared ray. Infrared ray has high directivity and, therefore, it is not likely that content data transmitted to a certain receiving apparatus is received by a different apparatus. On the other hand, communication using non-directional radio wave such as wireless LAN and Bluetooth (registered trademark) is also available. As is well known, when wireless LAN is used, communication range may have as large a radius as 100 m or longer, with a base station of wireless LAN being the center. If the system is constructed in the similar manner as in the first embodiment, it is highly likely that the content data be played by a receiving apparatus that is not the intended apparatus. Such a situation should be avoided.

Wider use of communication method represented by wireless LAN is expected in the future, and therefore, it would be beneficial if the system similar to that of the first embodiment could be constructed for such a communication method. In the system of the second embodiment described in the following, wireless LAN is used for transmitting content data, and the possibility that the content data is received by an erroneous destination is eliminated.

For this purpose, in the second embodiment, a remote control function by a dedicated infrared receiving unit 82 is utilized, which is not used for content data transfer in the first embodiment above. Some portable telephones of these days have an infrared emitting unit for remote control and a function of emitting infrared ray in accordance with a prescribed program. Such a program is prepared individually conforming to the type of remote used by each manufacturer of electric home appliances, and it is often downloadable from an appropriate site on the Internet. Therefore, it is possible to utilize a portable telephone having such a function as a remote controller of the content data receiving apparatus and to control the receiving apparatus.

The second embodiment relates to a system in which the portable telephone is used as a remote for controlling the receiving apparatus and, in combination with content data transmission using wireless LAN, content data is transferred from a portable information terminal such as the portable telephone to the receiving apparatus to be displayed/played, in highly operable and safer manner.

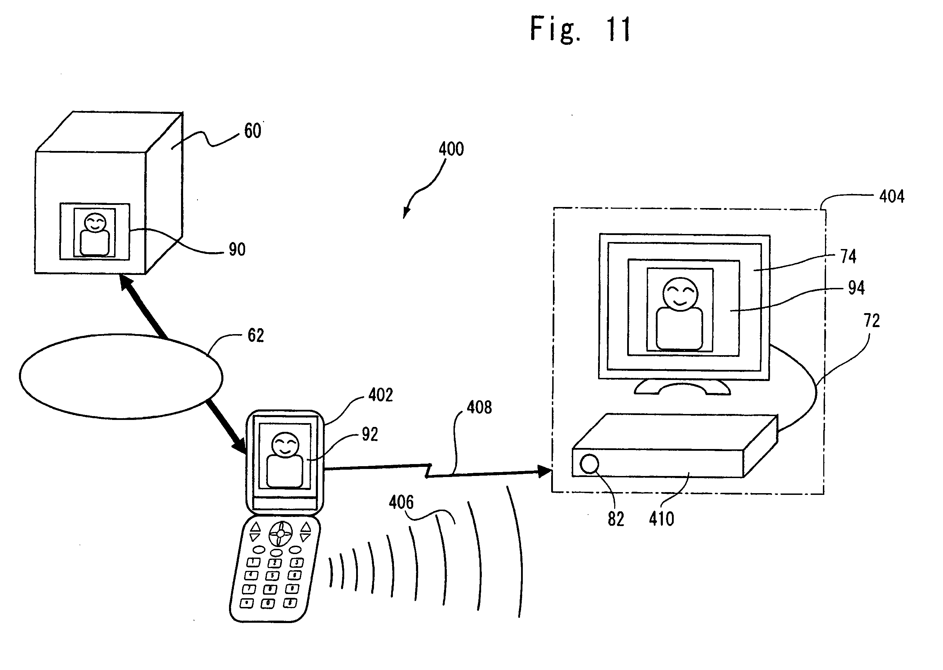

Fig. 11 shows a schematic configuration of an information system 400 in accordance with the second embodiment. Referring to Fig. 11, information system 400 includes a portable telephone 402 and a content playing system 404. Similar to portable telephone 64 of the first embodiment, portable telephone 402 is capable of downloading and storing content data such as an image 90 from content server 60 through a portable telephone network and the Internet. Further, portable telephone 402 has a function of emitting infrared ray for remote control and controlling emission of the infrared ray in accordance with a prescribed program, and wireless LAN communication function, for wireless communication 406. Content playing system 404 includes an infrared receiving unit 82, a DVD recorder 410 with hard disk having a wireless LAN communication unit, not shown in Fig. 11, monitor 74, and cable 72 connecting DVD recorder 410 with hard disk to monitor 74.

In the present embodiment, content data is transmitted from portable telephone 402 to DVD recorder 410 with hard disk, through wireless LAN 406. As described above, with wireless LAN, the communication data may possibly be received at a position as far away as 100 m or more. Therefore, in the present embodiment, encrypted content data is transmitted by wireless communication 406, a key for the encryption is transmitted through communication using infrared ray 408, and the content data is decrypted using the key, as will be described in detail later. Infrared ray for remote control has high directivity and its maximum reach is about 4m to 6m. Therefore, reception by another apparatus is not possible during normal use.

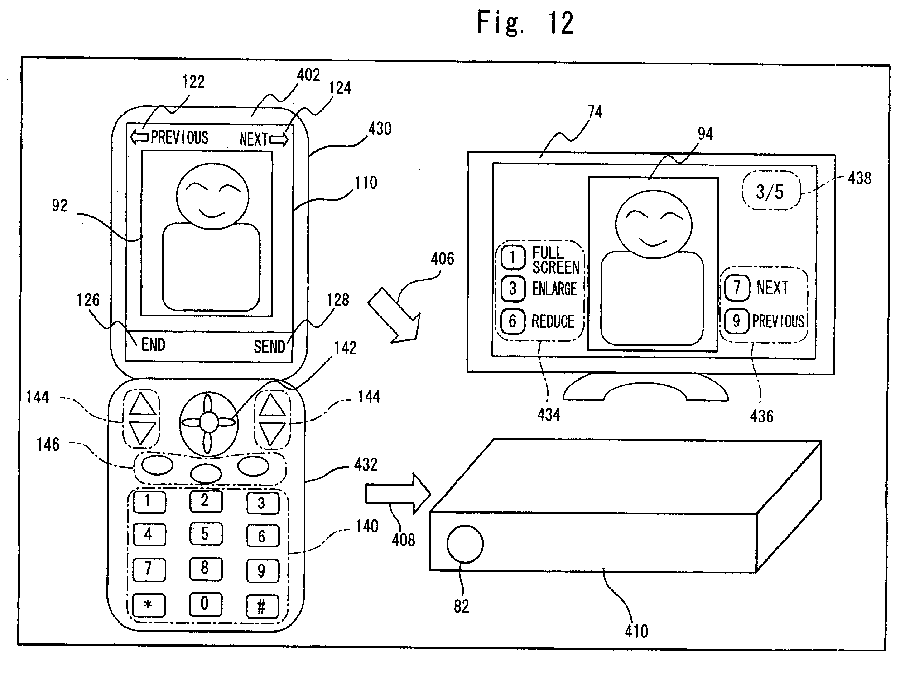

Fig. 12 shows examples of display on portable telephone 402 and on monitor 74, as well as keys for user operation, in accordance with the present embodiment. Referring to Fig. 12, portable telephone 402 includes a lid portion 430 having liquid crystal display 110, and a body 432. Lid portion 430 has an infrared emitting unit for remote control, not shown. A communication apparatus for wireless LAN is provided inside the body 432.

The display on liquid crystal display 110 is the same as that of the first embodiment. Further, arrangement of various keys on body 432 is also the same as that of the first embodiment. It is noted, however, that in the present embodiment, DVD recorder 410 with hard disk can be controlled by the remote control function of portable telephone 402, and therefore, operations inside the portable telephone 420 and in DVD recorder 410 with hard disk when various keys provided on portable telephone 402 are operated are different from those of the first embodiment.

Though it is possible in the first embodiment to store content data transmitted from portable telephone 64 in DVD recorder 70 with hard disk, it is not possible to control from portable telephone 64 such that the data is read from DVD recorder 70 with hard disk and displayed. In the present embodiment, remote control function of portable telephone 402 enables such control. By way of example, it is possible to transmit and store content data in DVD recorder 410 with hard disk, and to successively read and display stored images. Operation of DVD recorder 410 with hard disk in such an operation mode may be realized, for example, by pressing a specific key, such as key "7" on the transmission side apparatus such as portable telephone 64. An operation in which a plurality of images are transmitted collectively from portable telephone 402 to monitor 74, thumbnails of these images are displayed on monitor 74, and any of the images is selected and displayed in large size on monitor 74 also becomes possible.

In the example shown in Fig. 12, on monitor 74, together with the image 94, a display 434 indicating numerical keys to be pressed for instructing an operation on the displayed image, and a display 436 indicating numerical keys to be pressed for moving to a previous image or next image of the currently displayed image among the data stored in DVD recorder 410 with hard disk are displayed. When a numerical key corresponding to the display is pressed on portable telephone, the control data indicating the numerical key is transmitted as a remote control signal to the receiving apparatus such as DVD recorder 410 with hard disk, allowing selection of a desired one of the stored content data. Here, it is unnecessary for portable telephone 402 to know the meaning of control data, and what is necessary is simply to transmit which key is pressed.

In the example shown in Fig. 12, indication 438 of "3/5" means that there are five content data stored in DVD recorder 410 with hard disk, and the displayed content data is the third one.

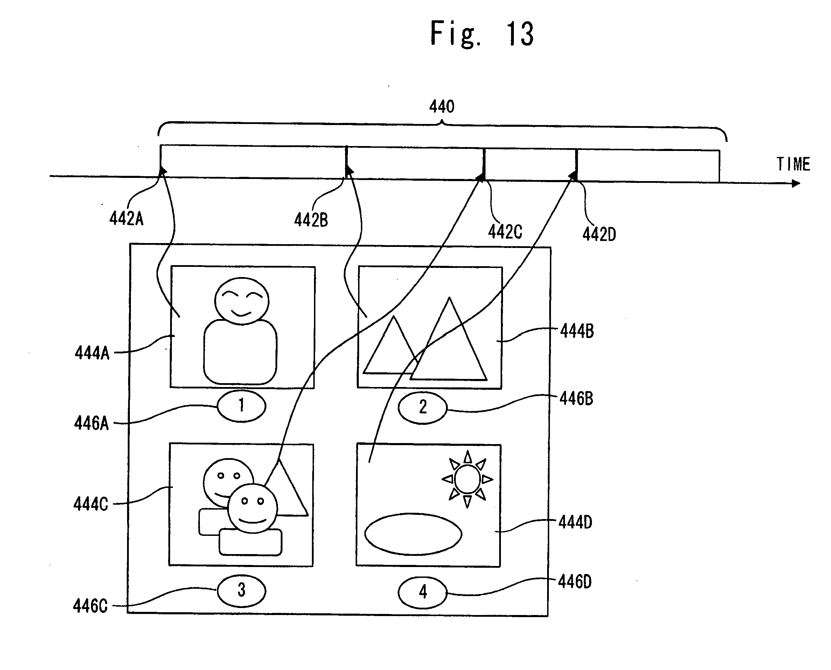

In the present embodiment, the following control is also possible as regards a movie. Referring to Fig. 13, assume that movie data 440 is transmitted from portable telephone 402 to DVD recorder 410 with hard disk. In the system of the first embodiment, play starts unconditionally from the head of movie data 440. In the present embodiment, however, it is possible to extract partial images 442A, 442B, 442C, 442D and the like of movie data 440 and to display these as thumbnails 444A, 444B, 444C, 444D and the like (generally referred to as "thumbnail 444") on the side of DVD recorder 410 with hard disk. Further, by displaying these thumbnails 444 with number buttons 446A, 446B, 446C, 446D and the like (generally referred to as "number button 446"), it becomes possible to designate any of the thumbnails 444 by the number, through remote communication from portable telephone 402. As a result, it becomes possible to play the movie data 440 from the image displayed by thumbnail 444 selected by the user.

### - Configuration of Portable Telephone 402 -

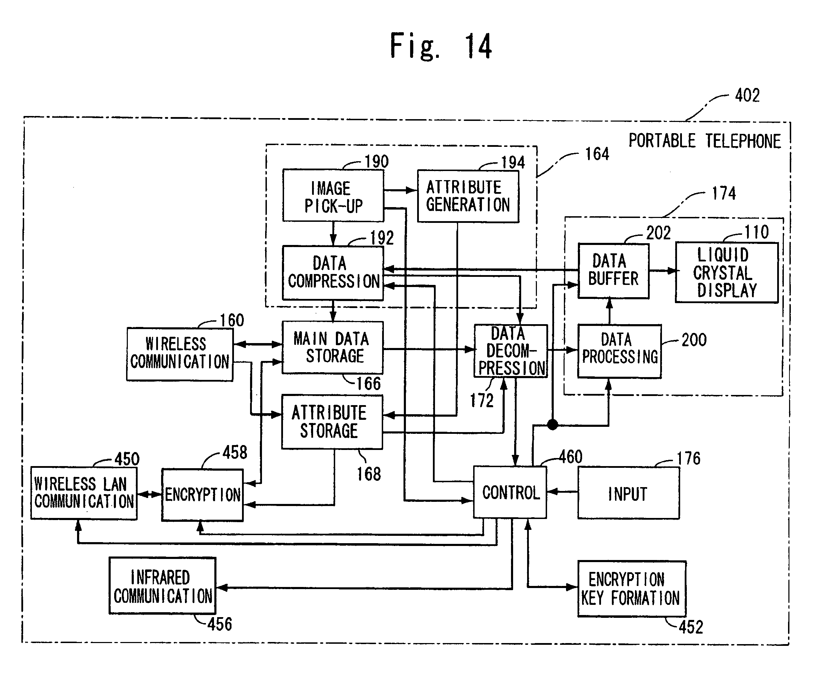

Fig. 14 shows, in the form of a block diagram, functional configuration of portable telephone 402 realizing such functions. In Fig. 14, the same portions as those of Fig. 13 are denoted by the same reference characters. Fig. 14 shows the configuration of Fig. 13 with some portions modified. The first difference is that in place of IrDA communication unit 162 shown in Fig. 3, portable telephone 402 includes a wireless LAN communication unit 450 including an antenna for wireless communication, connected to attribute storage unit 168 and main data storage unit 166. The second difference is that it includes an infrared transmitting unit 456 for remote control function. The third difference is that it includes an encryption key forming unit 452 for forming an encryption key to be used for wireless LAN communication. The fourth difference is that in place of control unit 170 of the first embodiment, it includes a control unit 460 having, in addition to the functions of control unit 170, the function of controlling wireless LAN communication unit 450 and infrared transmitting unit 456, as well as encrypted communication performed by wireless LAN communication unit 450.

Portable telephone 402 further includes an encryption processing unit 458 provided between main data storage unit 166 and attribute storage unit 168 and wireless LAN communication unit 450, for encrypting data transmitted through wireless LAN communication unit 450. When data is transmitted by encryption processing unit 458, an encryption key formed by encryption key forming unit 452 is used. Encryption processing unit 458 preferably has a function of encrypting at the time of decryption. Decryption, however, is not directly related to the present invention and, therefore, detailed description will not be given here.

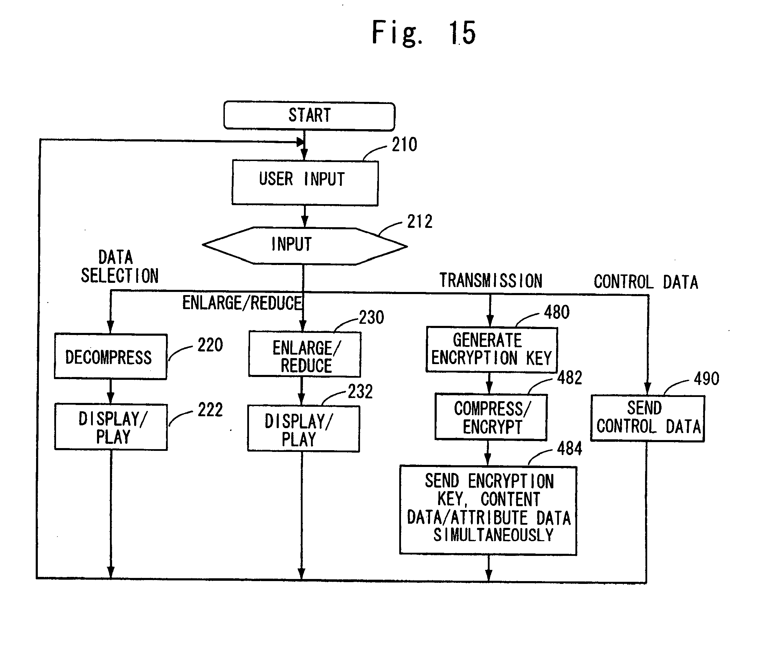

Fig. 15 shows, in the form of a flowchart, a control structure of a main portion of the program for controlling portable telephone 402 executed by control unit 460. In Fig. 15, program portions related to functions not related to the present invention are omitted.

Fig. 15 differs from the flowchart of the first embodiment shown in Fig. 4 in that the process when "transmission" is instructed is different from that of Fig. 4, and that a control data transmission process is newly added. The control data refers to the data for controlling operation of DVD recorder 410 with hard disk by a remote. Control data for DVD recorder 410 with hard disk used characteristically in the present embodiment includes control data instructing enlargement or reduction of displayed image, control data for selecting data already stored in DVD recorder 410 with hard disk, and control data instructing which of the thumbnails displayed on the screen at the time of play is to be selected.

Referring to Fig. 15, when "transmission" is instructed, an encryption key is formed at step 480. At step 482, content data to be transmitted is compressed, and the compressed content data and its attribute data are encrypted, using the encryption key. At step 484, a process of transmitting the encryption key using infrared transmitting unit 456 for remote control and a process of transmitting the content and attribute data encrypted at step 480 are performed simultaneously using wireless LAN communication unit 450. Such processing becomes possible as two units, that is, infrared transmitting unit 456 and wireless LAN communication unit, are provided. Then, the flow returns to step 210 to be ready for the next input by the user.

When it is determined at step 212 that transmission of control data is instructed, the flow proceeds to step 490. At step 490, control data is transmitted using infrared transmitting unit 456. After completion of transmission, the flow returns to step 210.

### - Configuration of DVD Recorder 410 with Hard Disk -

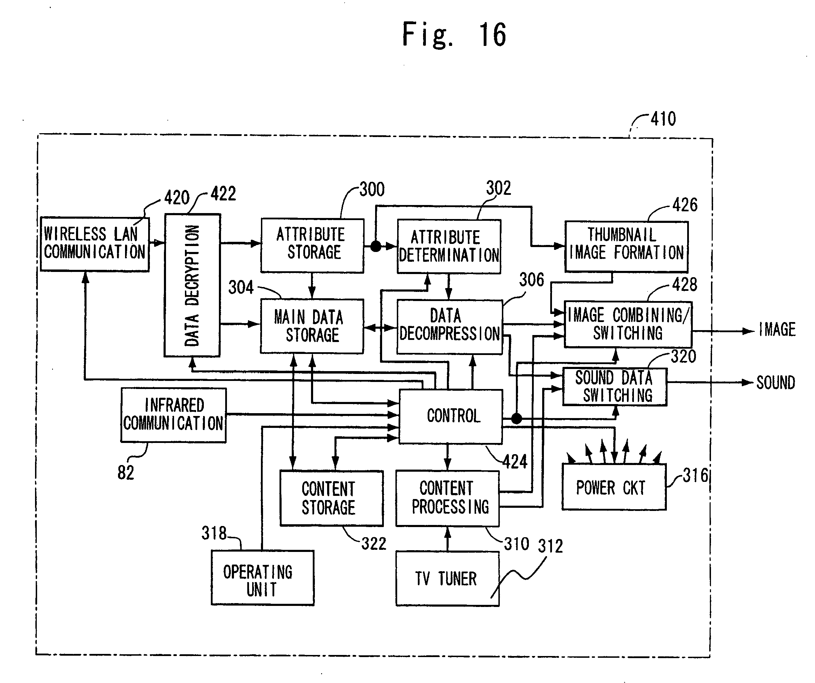

Fig. 16 shows, in the form of a block diagram, a configuration of DVD recorder 410 with hard disk. DVD recorder 410 with hard disk corresponds to DVD recorder 70 with hard disk in accordance with the first embodiment shown in Fig. 8, with some portions modified. Referring to Fig. 16, DVD recorder 410 with hard disk is different in some points from DVD recorder 70 with hard disk shown in Fig. 8. The first point is that DVD recorder 410 with hard disk includes wireless LAN communication unit 420 in place of IrDA communication unit 80 of Fig. 8. The second point is that DVD recorder 410 with hard disk includes a data decryption processing unit 422 for performing a process of decrypting encrypted data received by wireless LAN communication unit 420 and applying the attribute data to attribute storage unit 300 and applying the compressed content data to main data storage unit 304, respectively. The third point is that DVD recorder 410 with hard disk includes, in place of control unit 308 of the first embodiment, a control unit 424 receiving and decrypting the encrypted content data and attribute data using wireless LAN communication unit 420, data decryption processing unit 422 and infrared receiving unit 82, and executing processing of the content data in the similar manner as in the first embodiment. Data decryption processing unit 422 decrypts using the encryption key received by infrared receiving unit 82. Data decryption processing unit 422 generally has data encrypting function. The encrypting process, however, is not directly related to the present invention and, therefore, detailed description thereof will not be given here.

DVD recorder 410 with hard disk further includes a thumbnail image forming unit 426 determining whether the data is content data including movie, based on the attribute information stored in attribute storage unit 300, forming thumbnail images from the movie data if movie is included, and further forming a thumbnail selecting image. Further, DVD recorder 410 with hard disk is different from DVD recorder 70 with hard disk in that in place of power supply circuit 316 shown in Fig. 8, it has an image combining/switching unit 428 having three inputs. The function of image combining/switching unit 428 is almost the same as that of image combining/switching function 314, except that the third input is connected to receive the thumbnail selecting image from thumbnail image forming unit 426. Control unit 424 controls image combining/switching unit 428 such that when image data is received, image combining/switching unit 428 selects and outputs the thumbnail selecting image from thumbnail image forming unit 426.

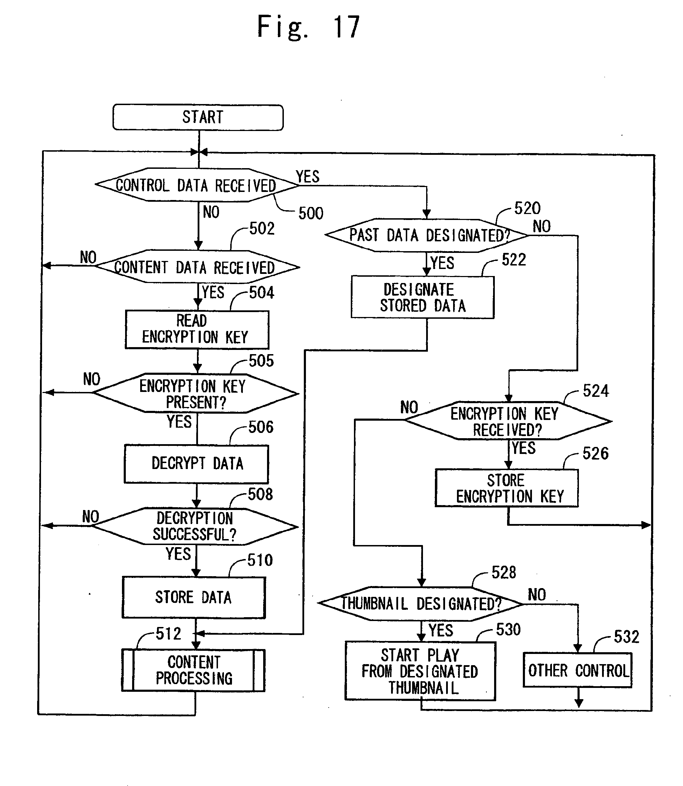

Fig. 17 shows, in the form of a flowchart, a main portion of the program for realizing processing of the content data described above by control unit 424 controlling various portions of DVD recorder 410 with hard disk. Referring to Fig. 17, in this process, at step 500, whether control data has been received or not is determined. When control data has been received, the flow proceeds to step 520 and otherwise, the flow proceeds to step 502.

At step 502, whether the content data has been received or not (that is, whether wireless LAN communication unit 420 has received data or not) is determined. If content data has been received, the flow proceeds to step 504, and otherwise, the flow returns to step 500.

At step 504, the encryption key is read from main data storage unit 304. The encryption key should have been received through infrared receiving unit 82 prior to or simultaneously with this process and stored in main data storage unit 304. At step 504, the time when the encryption key was stored, the time when reception of the content data started and the present time are compared, to confirm that the encryption key was received after the start of receiving content data, and then, the encryption key is read. Specifically, in this step, whether or not the encryption key was received in a simultaneous and parallel manner with the content data is determined.

At step 505, whether the encryption key satisfies the above-described conditions or not is determined. If not, the flow returns to step 500. If satisfied, the flow proceeds to step 506.

At step 506, the received contents data and attribute data are decrypted using the encryption key. At step 508, whether the decryption was successful or not is determined. If decryption succeeds, the flow proceeds to step 510, and if it fails, the flow returns to step 500. At step 510, the decrypted content data is applied to main data storage unit 304 and attribute data is applied to attribute data storage unit 300, respectively, to be stored therein. At this time, the number of stored images and the like is updated. Further, at step 512, a prescribed content processing such as play of the content data starts. When the content processing starts, the flow returns to step 500, and the above-described processes are repeated.

On the other hand, if it is determined at step 500 that the control data has been received, the process following step 520 will be executed. At step 520, it is determined whether or not the received control data instructs display/play of data that has been received in the past and stored in DVD recorder 410 with hard disk. If the determination result is YES, the flow proceeds to step 522, and otherwise, the flow proceeds to step 524.

At step 522, content data designated by the control data is selected, and the flow proceeds to step 512. The process after step 512 is the same as when a content data is received.

At step 520, if it is determined that the content data does not designate past data, the flow proceeds to step 524. At step 524, whether the received control data includes an encryption key or not is determined. If the received control data includes an encryption key, the received encryption key is stored in main data storage unit 304 at step 526, and the flow returns to step 500. If the control data does not include any encryption key, the flow proceeds to step 528.

At step 528, whether the control data includes thumbnail designation for movie play or not is determined. As described above, when a movie data is received, DVD recorder 410 with hard disk forms thumbnails and displays these on the screen. By designating a number button attached to the thumbnail, the user instructs play of the movie from the designated scene. At step 528, whether the received control data designates such a thumbnail for movie play or not is determined. Specifically, the designation indicates the number attached to a thumbnail image. If the control data includes thumbnail designation, the flow proceeds to step 530, and otherwise, the flow proceeds to step 532.

At step 530, play of the movie from the thumbnail designated by the control data starts. Then, the flow returns to step 500. At step 530, other control is done in accordance with the control data. Then, the flow returns to step 500.

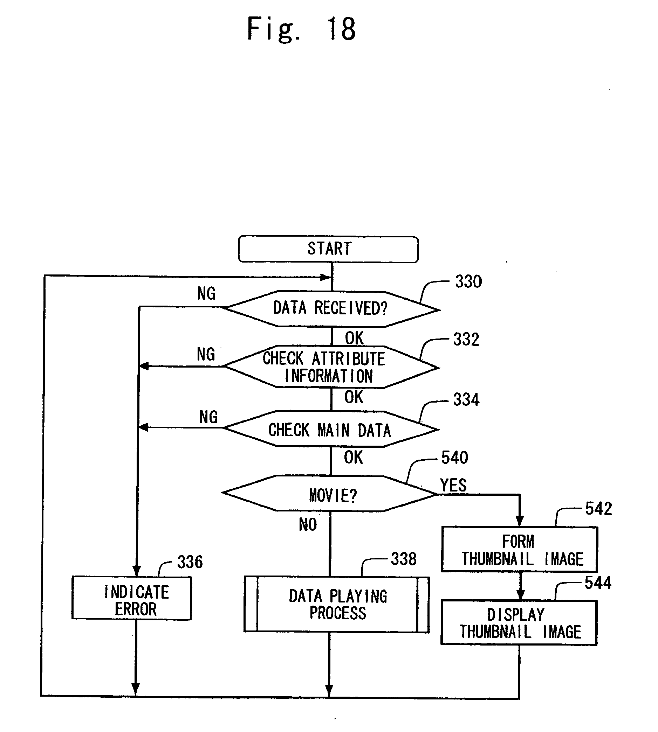

Fig. 18 is a flowchart of content processing executed at step 512 of Fig. 17. The process shown in Fig. 18 corresponds to the process of Fig. 9, which additionally includes the process (steps 540 to 544) when the movie data is received. The process shown in Fig. 18 is performed not only on the received content data but also on content data stored in main data storage unit 304 when the content data is designated.

In the present embodiment, if it is determined at step 334 that the main data is normal, the control proceeds to step 540. At step 540, whether the content data as the object of processing is movie data or not is determined. This determination is made by examining attribute information of the content data as the object. If it is movie data, the flow proceeds to step 542, and otherwise, the flow proceeds to step 338.

At step 542, thumbnail images are formed by a prescribed method from the movie data. By way of example, if the movie data is in MPEG format, the data includes images referred to as I pictures. The I picture represents one image independently by itself. Therefore, at step 542, from the I pictures, a prescribed number of thumbnails are selected. Alternatively, a scene change may be automatically detected and a head of the new scene may be used as a thumbnail. A known technique may be used for forming the thumbnails. Further, at step 542, an image showing the thus formed thumbnails with number buttons for identifying the thumbnails arranged side by side is formed.

At step 544, the thumbnail image is transmitted to monitor 74. Then, the flow returns to step 330.

The data playing process executed at step 338 is the same as that shown in Fig. 10.

### - Operation -

The information system 400 (see Fig. 11) in accordance with the second embodiment described above operates in the following manner. First, referring to Figs. 14 and 15, an operation of portable telephone 402 will be described. In the following, description of portions not directly related to the present invention such as the operation of portable telephone 402 for downloading a content from the Internet to portable telephone 402 will not be given. Specifically, it is assumed that content data such as image data and movie data have already been stored in main data storage unit 166 shown in Fig. 14.

Referring to Fig. 14, the user reads desired content data from main data storage unit 166 by an operation using input unit 176, and has the data displayed on liquid crystal display 110. The operation of portable telephone 402 at this time is the same as that of portable telephone 64 in accordance with the first embodiment.

Assume that the user has the desired content data displayed on liquid crystal display 110 and thereafter instructs "transmission" shown in Fig. 12. This instruction is passed from input unit 176 to control unit 460. Receiving this instruction, control unit 460 operates in the following manner. If the displayed content data is image data, control unit 460 issues an instruction to data compression unit 192, so that the image stored in data buffer 200 is read and compressed. Data compressing unit 192 applies the compressed data to main data storage unit 166. If the displayed content is movie data or music data that varies with time, control unit 460 selects the original data stored in main data storage unit 166.

On the other hand, control unit 460 instructs encryption key forming unit 452 to from an encryption key. Control unit 460 controls encryption processing unit 458 such that the data as the object of transmission stored in main data storage unit 166 and the corresponding attribute data stored in attribute storage unit 168 are encrypted using the encryption key formed by encryption key forming unit 452.

Control unit 460 transmits the encrypted content data and attribute data through wireless LAN communication unit 450. At the same time, control unit 460 applies the encryption key formed by encryption key forming unit 452 to infrared communication unit 456, to be transmitted as infrared remote control transmission.

The operation of portable telephone 402 at the time of content transmission is as described above.

In contrast, an operation for displaying content data stored in DVD recorder 410 with hard disk on monitor 74, feeding forward or backward the content data displayed on monitor 74 one by one, or for selecting a thumbnail displayed on monitor 74 is given by using input unit 176 to control unit 460. Control unit 460 transmits an instruction of such control as control data, using infrared communication unit 456. Wireless LAN communication unit 450 is not used.

Referring to Figs. 16 to 18, DVD recorder 410 with hard disk operates in the following manner. Here again, it is assumed that a plurality of content data have already been stored in main data storage unit 304 of DVD recorder 410 with hard disk.

When wireless LAN communication unit 450 receives content data from portable telephone 402, wireless LAN communication unit 450 applies the received data to data decryption processing unit 422. The data has been encrypted and hence it cannot readily be used. When infrared receiving unit 82 receives the encryption key at the same time, control unit 424 stores the encryption key, and applies it to data decryption processing unit 422. Data decryption processing unit 422 decrypts the received data using the encryption key, and stores the content data in main data storage unit 304. Further, data decryption processing unit 422 applies, from the decrypted received data, the attribute information to attribute storage unit 300.

Based on the attribute data stored in attribute storage unit 300, attribute determining unit 302 determines whether the data as the object of processing can be processed by DVD recorder 401 with hard disk or not, and if decompression is possible, issues an instruction to data decompressing unit 306 to decompress the received data. If it is determined from the attribute information of the decrypted data that the content data is movie data, thumbnail image forming unit 426 forms thumbnail information from movie data, and applies the information to image combining/switching unit 428. Data decompressing unit 306 writes the decompressed received data in main data storage unit 304, and applies the same to image combining/switching unit 428 and to sound switching unit 320.

Control unit 424 controls image combining/switching unit 428 such that output of thumbnail image forming unit is selected when the content data is received and the data is movie data, and output of data decompressing unit 306 is selected when the data is other data. The control of sound switching unit 320 is the same as in the first embodiment.

If the control data received through infrared receiving unit 82 instructs display/play of the content data stored in main data storage unit 304, control unit 424 instructs data decompressing unit 306 to read the designated content data from main data storage unit 304. Attribute determining unit 302 reads the attributes of the data read from main data storage unit 304 from attribute storage unit 300, and if processing of data is possible, the data is decompressed by data decompressing unit 306. Data decompressing unit 306 applies the decompressed data to image combining/switching unit 314.

If it is found from the attribute information that the content data decompressed by data decompressing unit 306 is movie data, thumbnail image forming unit 426 forms thumbnail images of the movie, and further forms a thumbnail selecting image having the plurality of thumbnail images and corresponding number buttons arranged, and applies the same to image combining/switching unit 428.

In accordance with the control signal from control unit 424 and the attribute information stored in attribute storage unit 300, image combining/switching unit 428 switches the image from content processing image 310 either to the thumbnail selecting image applied from thumbnail image forming unit 426 or the content data applied from data decompressing unit 306. Specifically, if the content data to be played is movie data, the thumbnail selecting image from thumbnail image forming unit 426 is selected, and otherwise, the data from data decompressing unit 306 is selected, and output to monitor 74. Even when video image from TV tuner 312 has been displayed on monitor 74, the display is switched upon reception of the content data and the content data or thumbnail selecting image is displayed.

The operation of sound switching unit 320 is the same as in the first embodiment.

When control data for thumbnail selection is received from portable telephone 402, control unit 424 controls the data decompressing unit 306 such that of the movie data decompressed by data decompressing unit 306, the image from the scene corresponding to the designated thumbnail is applied to image combining/switching unit 428. At the same time, control unit 424 controls image combining/switching unit 428 such that the data from data decompressing unit is selected. As a result, the video signal corresponding to the movie data is applied from DVD recorder 410 with hard disk to monitor 74, and displayed on monitor 74. When the movie data is of large size, selection of the thumbnail image described above may be transmitted from portable telephone 402 to DVD recorder 410 with hard disk while the data is being transferred from the movie data. In such a case, according to the present embodiment, reception and storage of the movie data are performed simultaneously and in parallel with play of the movie data.

In the present embodiment, it is possible to transfer content data at high speed from portable telephone 402 to DVD recorder 410 with hard disk using wireless LAN, and to switch the display on monitor 74 to show the content to the user. Though wireless LAN has no directivity and has long reach, the content of transfer is encrypted and, therefore, decryption is not possible even when the content is received by an unintended receiving apparatus. The control data and the encryption key are transmitted in accordance with infrared remote control communication system. Infrared ray as the medium has high directivity and short reach, and therefore, reception by a receiving apparatus other than the one intended by the user is unlikely. As a result, information system 400 in accordance with the present embodiment allows transfer, play/display of content data safely and quickly, using wireless LAN.

Further, in the embodiment described above, a transfer method is realized in which data transfer using wireless communication 406 and transfer of control data using infrared ray 408 are automatically selected and used in one application, not requiring user awareness as to the switching of communication method.

### - Modification -

In the second embodiment described above, the content data is decrypted only when the encryption key is received in a simultaneous and parallel manner after the start of receiving content data. The present invention, however, is not limited to such an embodiment. By way of example, the operation similar to that described above may be executed when the encryption key is received within a prescribed time period immediately before, or after, the reception of content data. Even if there is some time lag, when the content data and the encryption key are received approximately at the same time, reception of these may be considered "simultaneous and parallel." Alternatively, in response to reception of an encryption key immediately after reception of a series of content data, the content data may be decrypted using the encryption key. When the series of content data is not encrypted, or when decryption of content data using the encryption key received in the simultaneous and parallel manner is completed, a process designated by the control instruction may be executed on the content data, in response to reception of a control instruction to the content data immediately after the reception of the content data. In that case, correspondence between the received series of content data and the control instruction can reliably be determined. Further, it is possible to designate the process for the content data while the user has fresh memory on the received content data.

In the second embodiment described above, when thumbnails are formed for the movie data, the number of thumbnails to be formed is fixed. The present invention, however, is not limited to such an embodiment. For example, it is possible to form thumbnails substantially from scenes at every prescribed time intervals. In that case, the number of thumbnails formed becomes larger as the play time of movie data becomes longer. If the movie data originally has thumbnails, the thumbnails may be used, and formation of thumbnails at DVD recorder 410 with hard disk may be omitted.

In the second embodiment described above, wireless LAN is used as the medium for transmitting contents data. The present invention, however, is not limited to such an embodiment. Any medium for transfer capable of high-speed data transfer, such as Bluetooth (registered trademark) or IrDA may be used, no matter whether it has directivity or not.

In the embodiment described above, reception/storage and play of movie data are performed in simultaneous and parallel manner. The present invention, however, is not limited to such an embodiment. Play of the movie may be performed after reception and storage of the movie data have been fully completed.

Further, when the thumbnail image is formed on the side of the receiving apparatus (DVD recorder 410 with hard disk), the thumbnail image can be formed only from the movie data of which reception is complete. It may be possible to newly form thumbnail image and thumbnail selecting image in simultaneous and parallel manner along with the reception of movie data, and the display of thumbnail images may be updated every time a new thumbnail image is formed.

Further, in the embodiment described above, when the content data is movie data, DVD recorder 410 with hard disk forms the thumbnail selecting image including the thumbnail images and images of number buttons representing numbers allocated to the thumbnail images, which is displayed on monitor 74. The present invention, however, is not limited to such an embodiment. By way of example, only the thumbnails may be displayed on the thumbnail selecting image, the thumbnail images are selected one by one by a control signal from the portable telephone, and at the time point when a play instruction signal is applied from the portable telephone, play may be started from the image corresponding to the thumbnail selected at that time.

In the second embodiment described above, DVD recorder 410 with hard disk (Fig. 16) switches between the output of TV tuner 312 and the output of thumbnail image forming unit 426 or data decompressing unit 306 by image combining/switching unit 428. The present invention, however, is not limited to such an embodiment. By way of example, the output of data decompressing unit 306 or the output of thumbnail image forming unit 426 may be allocated to a certain channel of TV tuner 312, and the content received by wireless LAN communication unit 420 may be displayed on monitor 74 not by switching by image combining/switching unit 428 but by channel selection of TV tuner 312.

Further, in the embodiment described above, a portable telephone is used as the transmitting apparatus. The present invention, however, is not limited to such an embodiment, and the transmitting apparatus may be implemented by using a digital still camera or a video camera such as a digital video camera, or a portable information terminal.

### [Third Embodiment]

### - Outline -

In the system in accordance with the first embodiment, DVD recorder 70 with hard disk simply plays/displays the content data transmitted from portable telephone 64. A function of a so-called slide show in which a plurality of images are displayed successively, each for a prescribed time period, must be realized by the side of DVD recorder 70 with hard disk. If such a slide-show display can be realized using DVD recorder 70 with hard disk not having such function, it may be convenient. The third system relates to such a system.

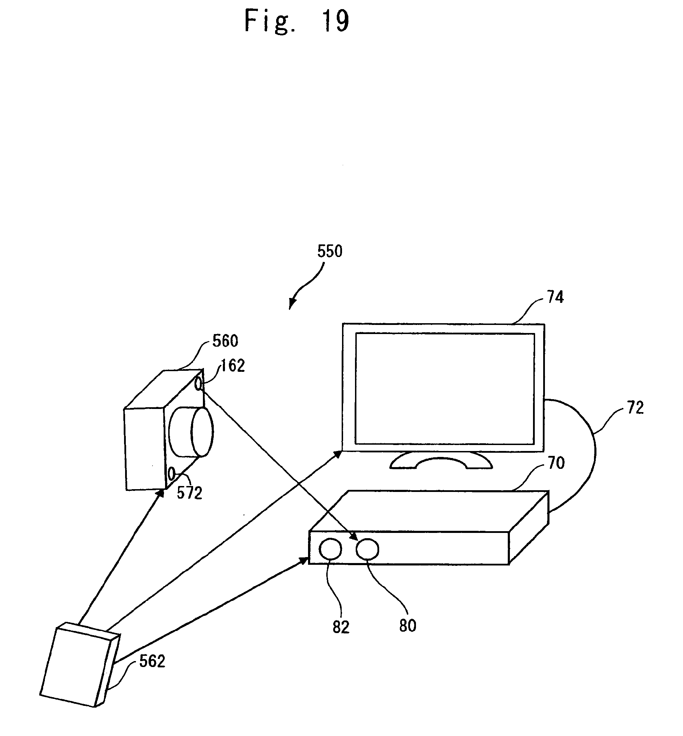

Fig. 19 shows a schematic configuration of a system 550 in accordance with the third embodiment. Referring to Fig. 19, the system 550 uses a digital camera 560 capable of picking-up and storing a number of digital still images, and DVD recorder 70 with hard disk and monitor 74 used in the first embodiment as they are, to realize the slide show described above. Digital camera 560 has an IrDA communication unit 162.

In the present embodiment, IrDA communication is used for transmitting the content data. As already described, IrDA communication uses infrared ray having high directivity for communication. Therefore, it is necessary to stably maintain the IrDA communication unit 162 of digital camera 56 and the IrDA communication unit of DVD recorder 70 with hard disk in a positional relation allowing satisfactory communication. Therefore, in the present embodiment, a remote 562 that can control both the digital camera 560 and DVD recorder 70 with hard disk is used. Specifically, digital camera 560 is provided with an infrared receiving unit 570 for remote control. By using remote 562, it becomes possible to control, from a remote position, digital camera 560 and DVD recorder 70 with hard disk while digital camera 560 is placed close to DVD recorder 70 with hard disk, and therefore, it becomes possible to realize stable data transfer and to enjoy the content data on a large screen.

### - Configuration of Digital Camera 560 -

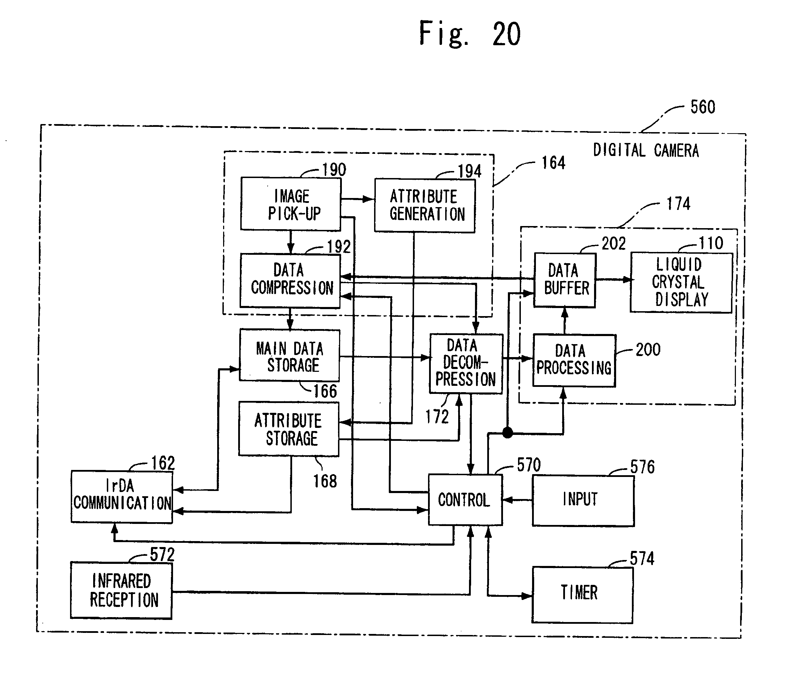

Fig. 20 shows, in the form of a block diagram, a schematic configuration of digital camera 560. Considering only the portions related to the present invention, digital camera 560 is different from portable telephone 64 in accordance with the first embodiment shown in Fig. 3 in that it does not have the function of a portable telephone. Except this point, however, it basically has a similar configuration as that of portable telephone 64.

Referring to Fig. 20, digital camera 560 is different from portable telephone 64 shown in Fig. 3 mainly in the following four points. The first point is that it includes an infrared receiving unit 572 in place of wireless communication unit 160 of Fig. 3. The second point is that it additionally includes a timer 574 for repeatedly measuring time for switching images in the slide show. The time for switching images may be freely set, and timer 574 has a function of applying, when the set time expires, a signal indicating expiration of set time to control unit 570, and restarting measurement of set time. The third point is that it includes an input unit 576 for receiving an operation input for the digital camera, in place of input unit 176. The fourth point is that it includes a control unit 570 executing a program for realizing the slide show function, in addition to the program realizing the functions provided by portable telephone 64 in accordance with the first embodiment, in place of control unit 170 shown in Fig. 3. Control unit 570 is different from control unit 170 further in that it operates in response to a remote control signal from infrared receiving unit 572 as well as to an operation input from input unit 576.

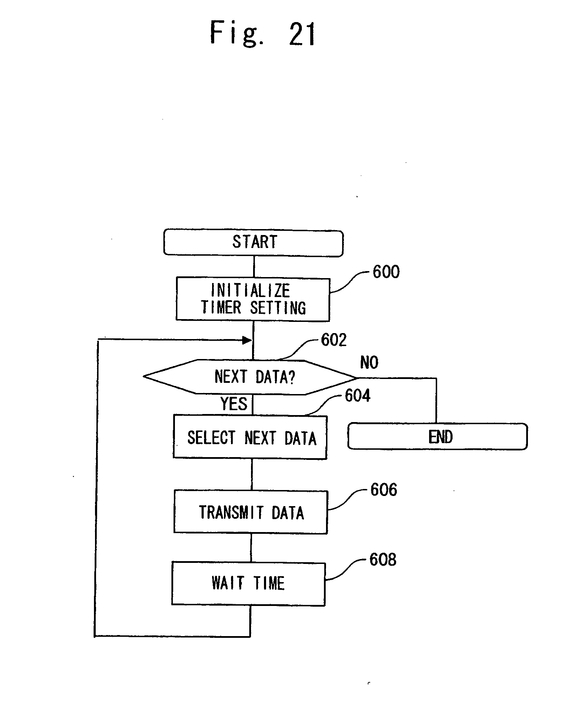

Fig 21 shows, in the form of a flow chart, a control structure of the program realizing the slide show on monitor 74, executed by control unit 570. Referring to Fig. 21, at step 600, timer length determining the time for which each image is displayed in the slide show is initialized. Specifically, the time for displaying each image in the slide show designated by the user is set in timer 574. At step 602, whether there is an image data following the image data displayed at present on monitor 74 (that is, the image data transferred immediately before from digital camera 560 to DVD recorder 70 with hard disk) in main data storage unit 166 or not (that is, whether display of all image data to be displayed has been completed or not) is determined. If there is the next data, the flow proceeds to step 604, and otherwise, the slide show ends.

At step 604, the image next to the image displayed at present is selected and the corresponding image data is read from main data storage unit 166. At step 606, the data is transmitted through IrDA communication unit 162. Receiving the data, DVD recorder 70 with hard disk displays the image on monitor 74, by the operation described with reference to the first embodiment.

At step 608, whether the signal indicating expiration of set time has been received from timer 574 or not is determined. The control waits for the signal from timer 574 at step 608, and upon reception from timer 574, the flow returns to step 602.

### - Operation -

Using input unit 576 or remote 562, the user sets a group of images as the object of slide show and the time for displaying each image. The setting information is stored in control unit 570. Thereafter, the user places digital camera 560 at an appropriate position facing IrDA communication unit 80 of DVD recorder 70 with hard disk.

When the user instructs to start slide show using input unit 576 or remote 562, the program of which control structure is shown in Fig. 21 is activated. First, in timer 574, the pre-set display time is initially set as the timer length. Among the image data as the object of slide show in main data storage unit 166, the head data (determined, by way of example, by the file name) is read from main data storage unit 166 and transmitted through IrDA communication unit 162 to DVD recorder 70 with hard disk.

Receiving the image data, DVD recorder 70 with hard disk plays/displays the received image data on monitor 74, in the manner as described in the first embodiment. Even when some other program or the like is being displayed at the time of data reception, DVD recorder 70 with hard disk stops the display immediately, and plays/displays the received image.

After the lapse of a prescribed time period, digital camera 560 reads the next image data from data storage unit 166, and transmits the same to DVD recorder 70 with hard disk. The image data is again immediately displayed in place of the previous image data.

In this manner, as digital camera 560 repeats the program shown in Fig. 21, slide show is realized by DVD recorder 70 with hard disk and monitor 74. When digital camera finishes the process of transmitting all the image data as the object of slide show to DVD recorder 70 with hard disk, control unit 570 of digital camera 560 terminates execution of the slide show program, and returns to a normal operational mode.

According to the third embodiment, slide show can substantially be realized using the same DVD recorder 70 with hard disk and monitor 74 as those used in the first embodiment (not having the slide show function). Further, digital camera 560 and DVD recorder 70 with hard disk can both be controlled by remote 562, and therefore, it is possible to enjoy the slide show on a large screen at a position of good distance from monitor 74, while digital camera 560 is placed at a position where satisfactory communication between digital camera 560 and DVD recorder 70 with hard disk is maintained.

### - Modification -

In the system of the third embodiment, a digital camera is used as a content data transmitting apparatus. The present invention, however, is not limited to such an embodiment. A portable telephone may be used as the transmitting apparatus as in the first and second embodiments, or other apparatus, such as a portable information terminal, may be used as the transmitting apparatus.

Further, in the present embodiment, in place of image-pick up unit 190, a mounting portion for a non-volatile detachable memory may be provided, and the content data may be read from such a memory and transmitted.

Further, in the embodiment described above, when the data is transmitted while the content data is being displayed on the content data transmitting apparatus, it becomes possible to perform slide show both on the transmitting apparatus side and on the receiving apparatus side, in synchronization. In that case, when a transmitting apparatus having a large display is used, the same image may be displayed in synchronization on two or more apparatuses, without using any cable. Further, in this case, different images may be displayed on respective apparatuses or the same image may be displayed on different timings, and various manners of use are possible.

Further, in the third embodiment described above, remote 562 that can control both digital camera 560 and DVD recorder 70 with hard disk is used. The present invention, however, is not limited to such an embodiment. By way of example, a dedicated remote controller may be used for digital camera 560 or DVD recorder 70 with hard disk. Further, an embodiment may be possible in which the remote controller is not used for either of the apparatuses. In such a case, it is preferred to incorporate the function of remote controller in the transmitting apparatus or the receiving apparatus such as the digital camera 560 or DVD recorder 70 with hard disk.

### - Common Modification -

In any of the above-described embodiments, as the content data to be transmitted, various data other than the image data, movie data, or music data may be used. As the content data receiving apparatus, it is not limited to the combination of a DVD recorder with hard disk and a monitor or the like, and an audio system, a TV receiver with communication function, a portable telephone, a digital still camera, a digital camera such as a digital video camera, a portable information terminal, a printer, a car navigation apparatus or the like may be used. Use of an apparatus having recording function (generally referred to as a video recorder) is preferred. Some apparatus may realize a function similar to that of DVD recorder 70 with hard disk and monitor 74, in combination or by itself. When content data is transmitted to a printer, it is preferred to transmit data having resolution as high as possible. When the content data is to be transmitted to a device having a relatively low resolution such as a monitor, it is preferred to lower data resolution to reduce data amount.

In the embodiments described above, a medium allowing bidirectional communication such as IrDA communication, wireless LAN, Bluetooth (registered trademark) or the like is used for data transmission. As is apparent from the fact that data transmission is possible substantially free of any protocol, one-directional transfer medium may be used from the transmitting apparatus to the receiving apparatus.

In the embodiment described above, the transmitting apparatus has a liquid crystal display. The present invention, however, is not limited to such an embodiment. Various display apparatuses may be used other then liquid crystal display. Considering that the device is mounted on a compact, portable information terminal such as a portable telephone, a device advantageous to size reduction, such as a liquid crystal display or organic EL (Electroluminescence) is preferred.

As the cable 72 used in each of the embodiments described above, an appropriate one may be adopted in accordance with the method of communication between the monitor and the receiving apparatus. By way of example, a cable for display such as NTSC (National Television Standard Committee), DVI (Digital Visual Interface) or the like may be used.

Content data may be any data including still image data, movie data (though MPEG is a representative digital format, it may be in any other format), music data (data provided by encoding recorded sound waveform, data allowing playing of a tune by using a prescribed acoustic source, or any other type), a program, or a file containing a control parameter.

In the embodiments described above, as a functional block for the DVD recorder with hard disk to receive broadcast, a TV tuner 312 is used. TV tuner 312, however, is only an example and various other content receiving apparatus may be used. For digital broadcast, an apparatus decoding MPEG2 by extracting a transport stream of MEPG2 may be used. It is possible to display decoded data on monitor 74, to transmit to an external apparatus or other medium, to apply the data to a printer apparatus, not shown, to be printed, or to play music.

Content data has a large data amount, and once transmitted and stored on the side of the receiving apparatus, it is available at any time. On the other hand, it is often the case that the control data based on a request from the user is for designating the method of play of the content data. The method of play may include fast forward, rewind, enlargement or reduction. The operation must respond to the user request, and therefore, every time there is a request, transmission/reception of the control data occurs. Though the data amount is small, frequency may be high. Namely, content data and control data are of different nature. Therefore, even when the medium for the communication method used for transmitting/receiving content data and the medium for the communication method used for transmitting/receiving control data are the same (for example, infrared ray), it is desirable to use different methods of modulation. There are various methods of communication such as Bluetooth (registered trademark), wireless LAN, IrDA, infrared remote control, portable telephone network, Ethernet (registered trademark), IP (Internet Protocol) communication and the like, and transmission/reception of content data and transmission/reception of control data may be realized by appropriately combining these methods.

In the embodiments above, content data is transmitted/received through a communication method substantially free of any protocol. The present invention, however, is not limited to such an embodiment, and before communication of the content data, data may be converted on the transmitting side to an appropriate data format or size through negotiation, by exchanging information of apparatuses, or error recovery may be performed by re-transmission, to coop with any communication error.

In the embodiments described above, it is assumed that the receiving apparatus may store a plurality of data. Dependent on the restriction of the storage apparatus, the number may have an upper limit. As the storage apparatus, a non-volatile one or volatile one may be used. Further, when the number of data exceeds the upper limit of data storage, or the data exceeds capacity limit, any of the stored data may be erased in accordance with some algorithm or other.

Further, if the data stored on the side of the receiving apparatus is still image or movie, determination may be made based on time, duration or the like to form thumbnails to be displayed as a list, and selection may be made therefrom for play/display.

In such a case, the following procedure may be executed:
1) receive content data,
2) receive a thumbnail display command,
3) establish groups of contents based on time information described in content attribute, information of reception time of the content and the like,
4) form thumbnails and layout all or some of the thumbnails on one image screen, and
5) receive a display command of a content corresponding to a thumbnail, and play the corresponding content.

In the embodiments described above, enlargement and reduction of a still image have been described. Transmission of a movie with the image made smaller through similar enlargement/reduction is also possible. For a movie, when it is designated on the side of the transmitting apparatus to segment data of some time period of the movie, it is possible to extract only that portion and to send the same to the receiver. Assuming that only a movie for 5 minutes from the position one hour from the start of a movie file of 2 hours should be sent, not the whole movie but only the segmented file may be transmitted.

The embodiments as have been described here are mere examples and should not be interpreted as restrictive. The scope of the present invention is determined by each of the claims with appropriate consideration of the written description of the embodiments and embraces modifications within the meaning of, and equivalent to, the languages in the claims.

### Industrial Applicability

The present invention may be utilized in a system in which two or more apparatuses utilizing contents, by way of example, a portable information terminal such as a portable telephone and a content playing apparatus having a large capacity storage such as a DVD recorder with hard disk, cooperate.

## Claims

1. A data processing apparatus, comprising:
first (420) and second (82) wireless receiving means each capable of receiving data through wireless communication, the first wireless receiving means (420) capable of receiving first data from a portable information terminal and the second wireless receiving means (82) capable of receiving second data from the portable information terminal (402);
a first data processing means (422) connected to the first wireless receiving means (420); and
a second data processing means (424) connected to the second wireless receiving means (82) and the first data processing means (422);
wherein the first data processing means (422) includes means operable to perform a process on the first data, determined in accordance with the second data, and the second data is received after, or simultaneously with, the reception of the first data, and
wherein said first data received by said first wireless receiving means (420) is encrypted by a prescribed encryption key, and the process performed by said means for performing a process included in said first data processing means (422) includes decrypting said first data received by said first wireless receiving means using the second data received by said second wireless receiving means (82) as an encryption key.

2. The data processing apparatus according to claim 1, wherein
said means included in the first data processing means (420) is operable to perform the process on a series of first data received by said first wireless receiving means.

3. The data processing apparatus according to claim 1, wherein
said first wireless receiving means (420) includes radio wave wireless receiving means, and said second wireless receiving means (82) includes an infrared receiving means.

4. The data processing apparatus according to claim 1, wherein
said first wireless receiving means (420) includes a first infrared receiving means receiving infrared ray modulated by a first modulation method; and
said second wireless (82) receiving means includes a second infrared receiving means receiving infrared ray modulated by a second modulation method different from said first modulation method.

5. The data processing apparatus according to claim 1, wherein
a transfer rate of said first wireless receiving means (420) is higher than transfer rate of said second wireless receiving means (82).

6. The data processing apparatus according to claim 1, further comprising:
data storage means (304) for storing the first data received by said first wireless receiving means (420); wherein said second data processing means (424) is operable to, in response to reception of a prescribed control designating signal by said second wireless receiving means (82), execute the process designated by said control designating signal on the first data stored in said data storage means (304).

7. The data processing apparatus according to claim 1, wherein
the first data received by said first wireless receiving means (420) includes content data playable in accordance with a prescribed playing method;
said data processing apparatus further comprising playing means for playing said content data processed by said first data processing means (422).

8. The data processing apparatus according to claim 7, further comprising content data recording means (322) for recording said content data processed by said first data processing means (422) and applying to said playing means for play upon receiving a prescribed instruction.

9. The data processing apparatus according to claim 8, further comprising:
determining means for determining whether the first data received by said first wireless receiving means (420) and recorded in said content data recording means (322) is movie data or not;
means responsive to a determination by said determining means that the first data received by said first wireless receiving means (420) and recorded in said content data recording means (322) is movie data, for forming a thumbnail selecting image having one or a plurality of thumbnail images arranged as a list from the first data received by said first wireless receiving means (420), and applying the thumbnail selecting image to a prescribed display apparatus for display; and
means responsive to application of thumbnail designating information designating any of said one or a plurality of thumbnail images from said second wireless receiving means (82), for starting play of said movie data from a position corresponding to the thumbnail image based on the movie data recorded in said content data recording means and applying it to said display apparatus.

10. The data processing apparatus according to claim 7, implemented by a video recorder apparatus.

## Patentansprüche

1. Datenverarbeitungsvorrichtung,
mit:
ersten (420) und zweiten (82) Drahtlosempfangseinrichtungen, die jeweils in der Lage sind, Daten mittels einer Drahtloskommunikation zu empfangen, wobei die erste Drahtlosempfangseinrichtung (420) in der Lage ist, erste Daten von einem portablen Informationsendgerät zu erhalten, und wobei die zweite Drahtlosempfangseinrichtung (82) in der Lage ist, zweite Daten von dem portablen Informationsendgerät (402) zu erhalten,
einer ersten Datenverarbeitungseinrichtung (422), welche mit der ersten Drahtlosempfangseinrichtung (420) verbunden ist, und
einer zweiten Datenverarbeitungseinrichtung (424), welche mit der zweiten Drahtlosempfangseinrichtung (82) und der ersten Datenverarbeitungseinrichtung (422) verbunden ist,
wobei die erste Datenverarbeitungseinrichtung (422) eine Einrichtung aufweist, die betreibbar ist, um auf den ersten Daten einen Prozess auszuführen, der gemäß den zweiten Daten bestimmt ist, wobei die zweiten Daten empfangen werden nach dem oder simultan mit dem Empfang der ersten Daten, und
wobei die von der ersten Drahtlosempfangseinrichtung (420) empfangenen ersten Daten mittels eines bestimmten Verschlüsselungsschlüssels verschlüsselt sind und der durch die Einrichtung zum Ausführen eines Prozesses, welche in der ersten Datenverarbeitungseinrichtung (422) enthalten ist, ausgeführte Prozess ein Entschlüsseln der durch die erste Drahtlosempfangseinrichtung empfangenen Daten unter Verwendung der durch die zweite Drahtlosempfangseinrichtung (82) empfangenen Daten als Verschlüsselungsschlüssel aufweist.

2. Datenverarbeitungsvorrichtung nach Anspruch 1,
wobei die in der ersten Datenverarbeitungseinrichtung (420) enthaltene Einrichtung betreibbar ist, um den Prozess auf einer Reihe von durch die erste Drahtlosempfangseinrichtung (82) empfangenen ersten Daten auszuführen.

3. Datenverarbeitungsvorrichtung nach Anspruch 1,
wobei die erste Drahtlosempfangseinrichtung (420) eine Radiowellendrahtlosempfangseinrichtung aufweist und
wobei die zweite Drahtlosempfangseinrichtung (82) eine Infrarotempfangseinrichtung aufweist.

4. Datenverarbeitungsvorrichtung nach Anspruch 1,
wobei
die erste Drahtlosempfangseinrichtung (420) eine erste Infrarotempfangseinrichtung aufweist, welche Infrarotstrahlen empfängt, welche mittels eines ersten Modulationsverfahrens moduliert sind, und
die zweite Drahtlosempfangseinrichtung (82) eine zweite Infrarotempfangseinrichtung aufweist, welche Infrarotstrahlen empfängt, welche mittels eines zweiten Modulationsverfahrens moduliert sind, welches vom ersten Modulationsverfahren verschieden ist.

5. Datenverarbeitungsvorrichtung nach Anspruch 1,
wobei die Übertragungsrate der ersten Drahtlosempfangseinrichtung (420) höher ist als die Übertragungsrate der zweiten Drahtlosempfangseinrichtung (82).

6. Datenverarbeitungsvorrichtung nach Anspruch 1,
welche des Weiteren eine Speichereinrichtung (304) zum Speichern der durch die erste Drahtlosempfangseinrichtung (420) empfangenen ersten Daten aufweist,
wobei die zweite Datenverarbeitungseinrichtung (424) betreibbar ist, um in Antwort auf den Empfang eines bestimmten Steuerzuordnungssignals durch die zweite Drahtlosempfangseinrichtung (82) hin den durch das Steuerzuordnungssignal bestimmten Prozess auf den in der Speichereinrichtung (304) gespeicherten Daten auszuführen.

7. Datenverarbeitungsvorrichtung nach Anspruch 1,
wobei
die durch die erste Drahtlosempfangseinrichtung (420) empfangenen Daten Inhaltsdaten aufweisen, die gemäß einem bestimmten Abspielverfahren abspielbar sind,
die Datenverarbeitungsvorrichtung des Weiteren eine Abspieleinrichtung zum Abspielen der mittels der ersten Datenverarbeitungseinrichtung (422) verarbeiteten Inhaltsdaten aufweist.

8. Datenverarbeitungsvorrichtung nach Anspruch 7,
welches des Weiteren eine Inhaltsdatenaufzeichnungseinrichtung (322) zum Aufzeichnen der durch die erste Datenverarbeitungseinrichtung (422) verarbeiteten Inhaltsdaten und zum Anwenden bei der Abspieleinrichtung zum Abspielen auf den Empfang einer bestimmten Instruktion hin aufweist.

9. Datenverarbeitungsvorrichtung nach Anspruch 8,
welche des Weiteren aufweist:
eine Bestimmungseinrichtung zum Bestimmen, ob die durch die erste Drahtlosempfangseinrichtung (420) empfangenen und in der Inhaltsdatenaufzeichnungseinrichtung (322) gespeicherten Daten Filmdaten sind oder nicht,
eine Einrichtung, welche auf eine Bestimmung durch die Bestimmungseinrichtung, dass die durch die erste Drahtlosempfangseinrichtung (420) empfangenen und durch die Inhaltsdatenaufzeichnungseinrichtung (322) aufgezeichneten Daten Filmdaten sind, hin antwortet, zum Ausbilden eines Miniaturauswahlbildes mit einem oder mit einer Mehrzahl von Miniaturbildern, die als eine Liste aus den durch die erste Drahtlosempfangseinrichtung (420) empfangenen ersten Daten angeordnet sind, und zum Anwenden des Miniaturauswahlbildes bei einer bestimmten Anzeigevorrichtung zur Anzeige, und
eine Einrichtung, welche auf eine Anwendung einer Miniaturbildbestimmungsinformation, welche ein jegliches des einen oder einer Mehrzahl von Miniaturbildern aus der zweiten Drahtlosempfangseinrichtung (82) bestimmt, hin antwortet, zum Beginnen eines Abspielens der Filmdaten von einer Position, welche mit dem Miniaturbild korrespondiert, und zwar auf der Grundlage der in der Inhaltsdatenaufzeichnungseinrichtung aufgezeichneten Filmdaten, und zu deren Anwendung in der Anzeigevorrichtung.

10. Datenverarbeitungsvorrichtung nach Anspruch 7,
welche als Videorecordervorrichtung ausgebildet ist.

## Revendications

1. Appareil de traitement de données comprenant :
des premier (420) et second (82) moyens de réception sans fil aptes chacun à recevoir des données par communication sans fil, le premier moyen de réception sans fil (420) étant apte à recevoir des premières données à partir d'un terminal d'information portable et le second moyen de réception sans fil (82) étant apte à recevoir des secondes données à partir du terminal d'information portable (402) ;
un premier moyen de traitement de données (422) qui est relié au premier moyen de réception sans fil (420) ; et
un second moyen de traitement de données (424) qui est relié au second moyen de réception sans fil (82) et au premier moyen de traitement de données (422) ;
étant précisé que le premier moyen de traitement de données (422) comprend un moyen apte à exécuter un traitement sur les premières données, déterminé selon les secondes données, et que les secondes données sont reçues après ou en même temps que la réception des premières données, et
étant précisé que les premières données reçues par le premier moyen de réception sans fil (420) sont chiffrées par une clé de chiffrement prescrite, et que le traitement exécuté par le moyen pour exécuter un traitement qui est contenu dans le premier moyen de traitement de données (422) comprend le déchiffrement des premières données reçues par le premier moyen de réception sans fil à l'aide des secondes données reçues par le second moyen de réception sans fil (82) comme clé de déchiffrement.

2. Appareil de traitement de données selon la revendication 1, étant précisé que ledit moyen contenu dans le premier moyen de traitement de données (420) est apte à exécuter le traitement sur une série de premières données reçues par ledit premier moyen de réception sans fil.

3. Appareil de traitement de données selon la revendication 1, étant précisé que le premier moyen de réception sans fil (420) contient un moyen de réception sans fil à ondes radio et que le second moyen de réception sans fil (82) contient un moyen de réception infrarouge.

4. Appareil de traitement de données selon la revendication 1, étant précisé
que le premier moyen de réception sans fil (420) contient un premier moyen de réception infrarouge qui reçoit un rayon infrarouge modulé par un premier procédé de modulation ; et
que le second moyen de réception sans fil (82) contient un second moyen de réception infrarouge qui reçoit un rayon infrarouge modulé par un second procédé de modulation, différent du premier procédé de modulation.

5. Appareil de traitement de données selon la revendication 1, étant précisé qu'un débit de transfert du premier moyen de réception sans fil (420) est supérieur au débit de transfert du second moyen de réception sans fil (82).

6. Appareil de traitement de données selon la revendication 1, comprenant également :
un moyen de stockage de données (304) pour stocker les premières données reçues par le premier moyen de réception sans fil (420) ; étant précisé que le second moyen de traitement de données (424) est apte, en réponse à la réception par le second moyen de réception sans fil (82) d'un signal de désignation de commande prescrit, à exécuter le traitement désigné par ledit signal de désignation de commande sur les premières données stockées dans le moyen de stockage de données (304).

7. Appareil de traitement de données selon la revendication 1, étant précisé
que les premières données reçues par le premier moyen de réception sans fil (420) contiennent des données de contenu aptes à être lues selon un procédé de lecture prescrit ;
que ledit appareil de traitement de données comprend également un moyen de lecture pour lire les données de contenu traitées par le premier moyen de traitement de données (422).

8. Appareil de traitement de données selon la revendication 7, comprenant également un moyen d'enregistrement de données de contenu (322) pour enregistrer lesdites données de contenu traitées par le premier moyen de traitement de données (422) et s'appliquant au moyen de lecture en vue d'une lecture lors de la réception d'une instruction prescrite.

9. Appareil de traitement de données selon la revendication 8, comprenant également :
un moyen de détermination pour déterminer si les premières données reçues par le premier moyen de réception sans fil (420) et enregistrées dans le moyen d'enregistrement de données de contenu (322) sont des données de film ou non ;
un moyen qui réagit au fait que le moyen de détermination détermine que les premières données reçues par le premier moyen de réception sans fil (420) et enregistrées dans le moyen d'enregistrement de données de contenu (322) sont des données de film, pour former une image de sélection de vignette présentant une ou plusieurs images de vignettes disposées sous forme de liste à partir des premières données reçues par le premier moyen de réception sans fil (420), et pour appliquer l'image de sélection de vignette à un appareil d'affichage prescrit, en vue d'un affichage ; et
un moyen qui réagit à l'application d'informations de désignation de vignette qui désignent l'une quelconque desdites images de vignettes à partir du second moyen de réception sans fil (82), pour démarrer la lecture des données de film à partir d'une position qui correspond à l'image de vignette sur la base des données de film enregistrées dans le moyen d'enregistrement de données de contenu, et pour l'appliquer à l'appareil d'affichage.

10. Appareil de traitement de données selon la revendication 7, mis en oeuvre par un appareil d'enregistrement vidéo.
